# EUROPEAN PATENT SPECIFICATION

(11) **EP 3 869 440 B1**
(45) Date of publication and mention of the grant of the patent: **23.07.2025**
(21) Application number: 21158009.7
(22) Date of filing: 18.02.2021
(51) Int. Cl.: G06Q 30/02, E05D 7/082, E06B 9/11, G06F 16/955

(54) **METHOD OF DIRECTING A USER TO AN ONLINE STORE**
VERFAHREN ZUM LEITEN EINES BENUTZERS ZU EINEM ONLINE-SHOP
PROCÉDÉ D'ORIENTATION D'UN UTILISATEUR VERS UNE BOUTIQUE EN LIGNE

(30) Priority: 21.02.2020 DK PA202070107; 24.03.2020 DK PA202070181
(43) Date of publication of application: 25.08.2021
(73) Proprietor: VKR Holding A/S, 2970 Hørsholm (DK)
(72) Inventor: MØLLER, Morten, 2970 Hørsholm (DK)
(74) Representative: Høiberg P/S

(56) References cited:
- EP-A1- 2 205 804
- EP-B1- 1 003 953
- DE-A1- 102012 017 000
- JP-A- 2012 062 740
- US-A1- 2014 006 207
- US-A1- 2014 203 085

## Description

The present disclosure relates to a method of directing a user to an online store to enable a purchase of a window covering device fitting a window.

### Background

Windows for buildings are normally arranged in outer walls or roof structures of a building, and are configured to cover window apertures in such buildings or roof structures. When such windows have been installed, end users (e.g. habitants, owners or administrators of the building) may find it difficult to identify and procure suitable aperture covering devices such as blinds or shutters for the installed window, or may even be unaware of which compatible aperture covering solutions exists for that type of window. Nonetheless, blinds or shutters are often easily installable by end users.

It is generally known to provide coverings such as roller blinds that are intentionally too wide, but are designed to be cut into the correct size after a purchase of the roller blind, and the manufacturer here hence relies on the user to cut the roller blind into a suitable size. A similar solution is provided for venetian blinds where slats of various types of hard material, including wood, plastic or metal may be cut into a desired size by a suitable cutting tool. This solution may be undesirable to some end users.

An alternative solution is that different window coverings, which are specifically adapted to different sizes, types and/or generations of windows, are made available by e.g. the window manufacturers, and these fit the respective window size, type and/or generation. Hence, when a user buys such a window covering, the user is assured that it fits the respective window. This naturally necessitates that a larger amount of different window coverings are needed. Moreover, this makes it complicated for the user to select the right covering device and may provide an unfortunate user experience when users tries to order such covering devices, as the risk of erroneously ordering an incompatible covering device may be significant. Hence, it is also known to apply an information label on the specific window which provides window information such as window size, window generation, window type, window material etc. which enables the user to identify relevant window information. Moreover, it is known to provide a Quick Response (QR) code on a window, where the code comprises information of the window.

A promotional video available at https://www.youtube.com/watch?v=Ycn-mRU6LXc shows a roof window equipped with a removable sticker applied to the glazing, the removable sticker including a visual representation of a window covering.

However, despite of all these measures provided, problems still exists for users when identifying and/or selecting correct accessory such as covering devices for windows. The present disclosure may help to solve one or more of the above mentioned issues. Additionally or alternatively, the present disclosure may help to provide an enhanced user experience for users that may have a desire of purchasing and/or getting informed of available window accessories for a window.

### Summary

Disclosed herein is, in a first aspect, a method of directing a user to an online store by means of a mobile user terminal to enable the user to purchase a window covering device for installation at a window, such as a roof window. The window comprises at least one first fastening mechanism configured to engage with a second fastening mechanism of a window covering device, and moreover, the window comprises an identification item comprising at least one machine-readable identifier. The machine-readable identifier comprises identification data of one or more of the window, the first fastening mechanism and/or identification data of at least one window covering device having a second fastening mechanism configured to engage with the first fastening mechanism. The identification data of the window may in aspects relate to the first fastening mechanism. The machine-readable identifier further comprises destination data directed towards the online store.

The method is defined in the appended claims.

The above mentioned method provides that a user may, in an easy and user friendly way, be directed to an online store by means of a mobile user terminal, such as a hand held, mobile user terminal and be presented to window covering devices that fits the actual and specific window comprising the first fastening mechanisms. The window manufacturer may have provided the machine readable identifier at the window, so that the user is ensured that the retrieved data and the data presented is correct and relates to the specific window. The solution according to the present disclosure, also helps a user to identify correct/fitting window covering devices when the user has a need for a window covering device. It is here to be understood that the user may not be part of an installation process of the window, and neither may he user be the one that owned the building or had residence in the building or room when the window was installed. Accordingly, the present disclosure enables that also such users may easily identify suitable window covering devices for the window, that matches the first fastening mechanisms and the size of the window.

The read identification data may hence in one or more aspects of the present disclosure, be forwarded, adapted or un-adapted by the user terminal, to the server at the web address when the web address is visited using the web application.

The server, which may be configured for providing a remote ordering service of window covering devices, such as an online store offering window covering devices for sale via the internet. It is understood that the server is generally provided at a server location remote from the at least one window and/or the user of the mobile user terminal. The at least one window may for example already have been installed in a building at a first geographical location, such as a building where the user lives or works. Further, the plurality of window covering devices may be stored at a manufacturer's warehouse at a second geographical location remote from the first geographical location, such as in a different country or in the same country but at another location such as in another city or country region. Alternatively or additionally, the plurality of window covering devices may have been prepared for individual transport by shipping providers, and may for example be scattered over a larger number of geographical locations closer to the intended group of users.

The plurality of window covering devices may generally, in aspects of the present disclosure, be of a design and construction intended for mass-production, as may be evident by having physical characteristics, such as size, shape, second fastening mechanism(s) and/or material, which are chosen from a finite number of different design specifications with predetermined characteristics. It is understood that, while the window may be of a design and construction intended for mass-production, embodiments of the at least one window may no longer be in production or available for purchase. However, it may still be possible to order window accessories for the respective window, the commercial availability of the window itself may thus not be required for providing a selection of window covering devices which fits the respective windows. Naturally, the window of the type installed and comprising the first fastening mechanism may in other aspects still be commercially available.

It is contemplated that a database of the server may comprise data of various physical characteristics of a plurality of different types of windows, whereby a selection may for example be made of window covering devices which fit, i.e. are backwards compatible with, a known window type no longer produced/sold. Receiving identification data at the server may enable look-up of such window types and/or window covering devices. Naturally, the window of the type installed and comprising the first fastening mechanism may in other aspects still be commercially available, and receiving the identification data at the server may enable look-up of such commercially available window types.

For example, the selection of one or more window covering devices based on the identification data provided to the server may be a selection of one or more window covering devices comprising one or more selected window covering devices, each selected window covering device being selected based on the identification data, and optionally also based on user data provided to the server.

In one or more aspects of the present disclosure, the server may comprise a computer-readable storage medium, which stores a plurality of digital records of, or relating to, the plurality of window covering devices which may be presented to and/or purchased by the user based on the provided identification data. In some aspects, each digital record may uniquely represent at least one type of window covering device. In some aspects, there may be a one-to-one correspondence between the digital records and the uniquely represented types of window covering devices. Alternatively or additionally, each window covering device may be represented by a digital record. The plurality of digital records may be arranged in a database e.g. to allow for efficient searching and look-up of window covering devices based on the identification data. The database may be stored on the computer-readable storage medium in a suitable data format, such as according to a Structured Query Language (SQL) data format, to allow for fast data manipulation and retrieval via a hardware processor, such as via query strings provided in the form of Structured Query Language (SQL) commands.

The server comprises a hardware processor, which is configured to receive a digital representation of identification data of, or relating to, the at least one window. This message/digital representation comprises or is based on the provided Uniform Resource Locator representation of a web address that is based on the destination data and the identification data, and which may be transmitted by the web application, such as an internet browser, installed at the mobile user terminal.

The transmitted message representing identification data and the URL representation may be a digital signal, such as a sequence of ASCII characters etc., such as a Transmission Control Protocol (TCP) data transfer, or any form of data stream suitable for reliably exchanging data. By receiving a message representing the identification data at the server, a remote order system at or communicating with the server, enables the server to provide a remote ordering service that responds to user-prompted requests, e.g. in the form of a message transmitted from the user terminal.. A remote ordering service may include providing individualized replies to the requests, as may generally be preferable when offering products for sale via an online store.

The hardware processor of the server may be configured to identify at least one matching digital record among the plurality of digital records based on the identification data. It is understood that the message representing identification data may not be required to contain all the information of the originally transmitted identification data transmitted from the user device, and that information provided to the server may consist of a minimal amount of information required for the hardware processor of the server to sufficiently identify at least one matching digital record based thereon. A digital record may for example be identified as matching the identification data if the digital record is of, or relates to, a window covering device of a type which is known to fit the window, e.g. by the at least one window being of a certain type and/or size and/or comprises a specific type of first fastening mechanisms. Alternatively or additionally, identifying at least one digital record as matching the identification data may be based on other criteria, such as relating to an aesthetic aspect or a general user preference. For example, if identification data of the at least one window identifies a colour of the window frame or a preferred colour of a covering part of the covering device, the hardware processor may be configured to employ an identification criterion based thereon.

In some aspects of the present disclosure, the server and the mobile user terminal are connected by a communications network configured for relaying communication data, such as a message representing and/or comprising the identification data. The communications network may be the internet. The communication data may include information based on the destination data, such as the Internet Protocol (IP) address of the server, such as by a destination IP address of a TCP data transfer header indicating the IP address of the server, so that the communications network may relay the communication data to the server. In one or more aspects of the present disclosure, a web address provided by means of the at least one machine-readable identifier may be the web address of the server. Alternatively or additionally, the web address provided by means of the machine-readable identifier may be the web address of another server, which for example may process the message representing identification data before redirecting the user to the web address of the server. In certain aspects of the present disclosure, the message may be provided from a user at a mobile user terminal having an automatic identification reader configured to read the machine-readable identifier and to provide a message representing the identification data to the server, such as by sending the message via a communications network, such as the internet.

In one or more aspects of the present disclosure, said presenting of one or more web page results of window covering devices may comprise presenting a selection of window covering devices among a plurality of window covering devices, wherein the selection of window covering devices represents a selected, subset of the plurality of window covering devices, and wherein the subset of window covering devices may be configured to fit and be installed at the window by means of the first and second fastening mechanisms. The subset may be a filtered sub-group, such as by the server compiling a subset of selected window covering devices from a larger group of a plurality of window covering devices, some of which may fit the window.

The hardware processor of the server may be configured to provide a selection of window covering devices corresponding to at least one matching digital record. Often, the selection of window covering devices may be a non-empty set of window covering devices selected/filtered from among the plurality of window covering devices . However, in certain rare circumstances, selection of window covering devices may not be possible e.g. if no digital records are found to be matching a particular instance of identification data because the at least one window is of an unrecognized type or an error occurred. It is understood that the selection of window covering devices generally comprises only a subset of the plurality of window covering devices available for remote ordering.

By identifying at least one matching digital record in the database at the server, each window covering device in the selection of window covering devices provided to the user is guaranteed to fit the at least one window. As for example discussed above, at least said selection of window covering devices made by a selection among the larger offering of the plurality of window covering devices is guaranteed to fit in this way. The selection of window covering devices comprises one or more window covering devices from the plurality of window covering devices, such as e.g. a subset between 1-10 window covering devices out of 100 or more available covering devices.

Hence, the online store may be configured so that window covering devices which do fit the window are presented to the user based on the identification data, whereas window covering devices of said plurality of window covering devices which are not part of said subset and are thus not configured to fit and be installed at the window by means of the first and second fastening mechanisms are deselected and hence not part of the presented subset.

It is understood that the selection of window covering devices is generally provided as a digital representation of the corresponding physical window covering devices to the user through the mobile terminal, and that the actual window covering device is first provided after purchase (e.g. parcel post and/or collected at a suitable location). For example, the hardware processor of the server may be configured to transmit a message representing the selection of window covering devices to the user, whereby the user can choose to order a window covering device from among said selection.

In one or more aspects of the present disclosure, the presented one or more web page results may be presented by means of the/an internet browser of the mobile user terminal. A technical effect of providing a URL representation of a web address of the online store to a web application in the form of an internet browser installed at the mobile user terminal may be that the identification data read from a machine-readable identifier is provided to a server at the web address by visiting said web address.

In one or more aspects of the present disclosure, the window may comprise a window pane comprising a visible pane part having a predetermined width, wherein the presented selection of one or more window covering devices is/are configured to cover a predefined width matching the predefined width of the visible pane part and/or configured to be installed at the window having a said visible pane part with said width.

In one or more aspects of the present disclosure, each window covering device fitting the at least one window may include the window covering device having a physical characteristic, such as a width, such as a covering width of a covering portion of said covering device, which fits a corresponding physical characteristic of each of the window, such as by being substantially identical to the width of the visible part of the window pane, and where the covering device comprises one or more second fastening mechanisms configured to engage with the first fastening mechanism(s) of the window.

Alternatively or additionally, each window covering device fitting the at least one window may include said window covering device having been adapted to fit and/or be installed at the at least one window "ab fabric", i.e. prior to the user receiving such a window covering device ordered via the remote ordering system, or even prior to a digital representation of the covering device being presented at the user terminal. For example roof windows may be manufactured to be of predefined sizes and shapes, and with one or more first fastening mechanisms preinstalled upon delivery of the window. Hence, the selection of window covering devices provided to the user enables the user to order window coverings which are specifically adapted to that particular size, type and/or material of the at least one window, and comprising second fastening mechanisms configured to engage with the first fastening mechanism(s) of the window. A user is this able to choose to buy any of the selected window covering devices presented at the mobile user terminal and be assured that it fits the respective window. Installing a window covering device which fits the respective window may then be a matter of engaging fastening mechanisms with little or no modification.

The fastening mechanism system comprising the first and second fastening mechanisms enables the user to easily install the covering device, e.g. in order to attach a housing/casette of the covering device with no more than two hands for this. Hence, e.g. guiding rails (if to be part of the covering device) may be installed more easily, which provides a more safe and user friendly solution. This may also be the case if the window is a roof window, that may often be more hard to access than "vertical" windows and may require a user to be placed in a more vulnerable installation position

In one or more aspects of the present disclosure, the window covering device to be ordered/purchased comprises a sheet of flexible material having a size and shape substantially identical to or slightly wider or narrower than, at least the visible part of the window pane that may not be covered by the frame. The sheet of flexible material may in aspects of the present disclosure be made from a textile a non-woven fabric, a polymer such as a plastic sheet or the like. In some aspects, the window covering device includes one or more drapes to be mounted at an interior side of the window. The one or more drapes may provide that a user can select a preferred style for the one or more drapes among a plurality of decorative patterns and/or colours. In some aspects of the present disclosure, the window covering device comprises a blind within a group of blinds such as pleated blind, roller blinds, interior shutters or the like to be mounted at an interior side of the window. The blinds may provide that a user can select a preferred style, material and/or colour for the blinds among a plurality of available combinations.

In some aspects, the machine-readable identifier comprises identification data and destination data, such as a web address of an online store or the like.

In one or more aspects of the present disclosure, the window may comprise a window pane and a frame, wherein the pane is arranged in the frame, wherein the frame comprises a movable sash connected to a fixation frame by means of a hinge system, wherein the hinge system allows the sash to be opened and closed relative to the fixation frame, and wherein the frame, such as the sash, and wherein the frame comprises the first fastening mechanism.

In one or more aspects of the present disclosure, the method may comprise the step of a user of the mobile user terminal operating a user interface of the mobile user terminal in order to purchase at least one window covering device of said presented selection of one or more window covering devices though said online store.

Further, one or more user prompted purchase related messages may hence be transmitted by the web application, such as an internet browser installed at the mobile user terminal, to the server, in order for the user to finish the ordering and purchase of one or more of the covering devices represented in the represented selection of one or more window covering devices presented to the user by the mobile user terminal.

In one or more aspects of the present disclosure, the method may comprise the step of installing the purchased at least one window covering devices at said window by means of the first and second fastening mechanisms. Hence, after a user receives the purchased window covering device, the received covering device may in aspects of the present disclosure be installed at the window by means of the at least one first fastening mechanisms of the window and the second fastening mechanisms of the window covering device, which are configured to engage with each other.

If the window is a roof window, said step of installing the window covering devices may comprises attaching one or more guiding rails of the purchased covering device for guiding a covering portion of the covering device along the length of the window. A user may here however be assured that also such guiding rails fits the window size and type upon receipt of the covering device as these may be part of the delivered covering device, and the user may easily install these as the first and second fastening mechanism may help to keep a housing/cassette of the covering device in place while installing the rails. It is understood that in aspects of the present disclosure, the fastening mechanisms may only provide a part of the final fixation of the covering device, as further fasteners, such as mechanical fasteners such as nails or screws may also be provided in order to fixate the covering device at the window after it has been initially put in place/installed at the window by means of the first and second fastening mechanisms.

In one or more aspects of the present disclosure, the destination data retrieved from the machine readable identifier may comprise a Uniform Resource Locator representation which is directed to the web address, and the Uniform Resource Locator representation that may be generated by the user device and provided to the web application may hence be based on said retrieved Uniform Resource Locator (URL) representation (186) of the destination data.

In one or more aspects of the present disclosure, the Uniform Resource Locator (URL) representation provided to the web application may comprises the identification data, such as by the identification data being appended to the web address. This provides a simple solution and/or a solution that may provide a browser-compatible mechanism for providing the identification data to the server by a web application accessing the web address.

It is understood that in some aspects of the present disclosure, when the information is retrieved from the machine readable identifier, the retrieved data may already be a representation of a Uniform Resource Locator (URL) that may beyond the destination data in the form of the URL, may also comprises the identification data, such as by the identification data being appended to/integrated the URL.

It is generally understood that in one or more aspects of the present disclosure, the machine-readable identifier may comprise a Uniform Resource Locator (URL) representation which is directed to a web address, such as the online store. The URL representation may be encoded as part of the machine-readable identifier so that an end user scanning the machine-readable identifier may e.g. be presented with the web address, such as via a barcode or QR code scanning software application installed at a smartphone. Such a software application may further be configured to prompt the user to visit the presented web address, such as via an internet browser software application also installed at the user terminal such as a smartphone or another handheld electronic device. The window having a machine-readable identifier according to one or more aspects of the present disclosure, provides that the end user can be automatically directed to a web address of an online store offering window coverings, which are specifically adapted to different sizes, types and/or generations of the windows e.g. by the window manufacturer. The destination data comprising the Uniform Resource Locator (URL) representation may be directed to a web address, such as an online store.

It is understood that an identifier may be a label or marking comprising a plurality of data elements, such as a sequence of numbers, letters or symbols chosen according to an encoding system to represent identification data. Such identifiers being machine-readable may provide that identification data can be decoded by a computer e.g. from digital images depicting the machine-readable identifier taken at a suitable distance and/or viewing angle. Particularly, a number of software applications for QR code scanning are commercially available and suitable for use e.g. with a smartphone.

Generally, the identification item comprising a machine-readable identifier provides that an end user can operate a mobile user terminal, such as a smartphone or a similar hand-held device comprising a suitable identification retrieving system, to scan the machine-readable identifier, e.g. via a digital camera, and retrieve the identification data easily. This enables a solution where the user can be presented with one or more covering devices which are compliant with the window in a user friendly way, and may hence help to reduce the risk of wrong purchases of covering devices for the windows at which the representation items and identification items are placed.

The identification data may in some aspects of the present disclosure provide the necessary information for identifying and/or selecting correct accessory such as covering devices for windows. Retrieving the identification data by scanning the machine-readable identifier may be less error-prone than manual entry by a user, whereby the user can be certain that this information was read correctly and pre-confirmed by e.g. the window manufacturer.

In some aspects of the present disclosure, the machine-readable identifier comprises a Uniform Resource Locator (URL) representation configured to provide the identification data to a server at a web address when the machine-readable identifier is read by an automatic identification reader of a mobile user terminal. The mobile user terminal may be a smartphone and the automatic identification reader a QR code scanner.

The identification data being provided to a server at a web address by scanning a machine-readable identifier may further provide an enhanced user experience for users that may have a desire of purchasing window accessories for the window.

In some aspects of the present disclosure, the Uniform Resource Locator (URL) representation may comprise the identification data. The identification data may be part of the web address. Alternatively or additionally, the identification data may be included in the web address as part of a Hypertext Transfer Protocol (http) request to the server, such as by GET request strings. By having the URL representation comprise identification data, providing the identification data to a server at the web address is made possible by using commercially available and more generic software applications e.g. for QR code scanning and/or server communication. It is understood that both the URL representation and the identification data may be suited for digital representation at a processor, e.g. as a sequence of ASCII characters, and hence their combination can be made to form a valid web address.

In some aspects, the machine-readable identifier comprises a Quick Response (QR) code provided at, such as printed on, the identification item, and where the Quick Response (QR) code comprises the identification data. Alternatively or additionally, the Quick Response (QR) code may comprise the destination data.

In one or more aspects of the present disclosure, the machine-readable may comprise comprises or be a barcode or a Quick Response (QR) code.

The automatic identification reader may be a QR code scanner system provided by means of a camera of the mobile user terminal and a QR code recognition software application installed at the mobile user terminal. Alternatively or additionally, the machine-readable identifier is a barcode, such as a two-dimensional barcode, and the automatic identification reader is a barcode scanner.

In other aspects of the present disclosure, the machine-readable identifier may be another type of machine readable identifier, e.g. comprising a radio-frequency identification (RFID) tag or a near-field communication (NFC) tag, and the user terminal may hence comprise a suitable hardware and one or more software applications adapted to retrieve the destination data and identification data therefrom.

In one or more aspects of the present disclosure, user data of the user and/or the mobile user terminal may be provided to the server.

In one or more aspects of the present disclosure, the hardware processor at the server may receive user data of the user and/or of the mobile user terminal. This may be provided together with the identification data and identification data, or in a subsequent separate message transmitted from the user device, e.g. upon request from the server. In some aspects, the user data may comprise an Internet Protocol (IP) address of the mobile user terminal. Alternatively or additionally, the user data may comprise cookie information, such as from a web cookie, such as tracking cookie information.

In one or more aspects of the present disclosure, identifying at least one matching digital record among a plurality of digital records in a database or the like may be automated based on the identification data and the user data. A selection of one or more window covering devices may be selected at the server, such as by a computer processor, based on the identification data and the user data.

In one or more aspects of the present disclosure, the presented one or more web page results of window covering devices may be based on the identification data and the user data.

In one or more aspects of the present disclosure, the user data may include a geographical location of the user and/or the mobile user terminal. By identifying at least one matching digital record among the plurality of digital records also based on the user data which includes a geographical location indicating the general vicinity of the user and/or the mobile user terminal, an advantage of providing a selection of window covering devices to the user which are for sale near the user may be facilitated. By the at least one matching digital record being identified among the plurality of digital records based on identification data relating to the at least one window and user data relating to the user (or at least the user's mobile user terminal), the present disclosure may also provide the advantage of providing a selection of window covering device which is more relevant to that specific user. For example, in certain aspects prior sales statistics may hereby be enabled to be analysed to reveal that a certain user demographic or nationality seems to prefer one type of window covering device over another, e.g. due to climatic differences between different geographical locations and consequently, that the selection of window covering device should be modified to better reflect that user preference and assist the user in selecting a more suitable window covering device among presented window covering devices that may be suitable for that specific geographical location.

In some aspects of the present disclosure, the geographical location may comprise or be a country code, such as ISO 3166-1 alpha-2 codes. Alternatively or additionally, the geographical location may be a Global Positioning System (GPS) coordinate set comprising a latitude and a longitude. The user device may comprise a GPS application that enables providing a specific geographical location. Additionally or alternatively, the user data may be based on cell phone network information, which may enable determination of geographical location of the user terminal. It is understood that the user and the mobile user terminal are generally in or around the same geographical location, which may be indoors. It is contemplated that prior to the mobile user terminal sending the message representing user data, the user may be presented with a list of possible geographical locations, such as a plurality of country codes, to choose from via a touch screen display or the like. The user data may also be derived or deduced based on a set of user parameters provided at the mobile user terminal, such as a locale including one or more of a user language, a user-preferred nationality, a place of residence, a shipping address, place of business or the like.

In some aspects of the present disclosure, each window covering device in the selection of window covering devices is available for sale at and/or delivery to said geographical location. Each window covering device in the selection of window covering devices may be available for sale at said geographical location for at least said selection of window covering devices among the plurality of window covering devices. The user data may hereby enable the server to provide a suitable selection.

In one or more aspects of the present disclosure, one or more of the presented selection of one or more window covering devices is/are window covering devices represented by a removable visual representation of a removable representation item attached to said window.

The removable representation item comprising the visual representation may in some aspects be or comprise a removable sheet, such as a foil or plastic sheet, which is removably attached to a surface of the window pane. The removable sheet may be made of a transparent, semi-transparent or translucent material, such as a clear plastic or polymer material, such as softened polyvinyl chloride (PVC), polyethylene terephthalate (PET) protective films or the like.

In one or more other aspects of the present disclosure, the removable representation item may be a removable sheet, such as a cardboard, paper or plastic item, attached to and extending between elongated frame parts of the window instead of adhering to the pane by means of an adhesive. Here, the removable representation item may e.g. be wedged between frame parts, such as elongated sash parts of the window. Also or alternatively, the removable representation item may here be attached to the first fastening mechanism of the frame which is configured to engage with a second fastening mechanism of at least one window covering device if installed at the window, such as a covering device corresponding to a covering device represented by the visual representation of the removable representation item.

In some aspects of the present disclosure, the removable representation item extends substantially along the entire width of the visible part of the window pane.

In aspects of the present disclosure the visual representation of the window covering device may be a graphical rendering, such as an image or a drawing of the window covering device.

In some advantageous aspects, the visual representation of the window covering device illustrates a blind or a shutter, such as a roller blind, a venetian blind or a roller shutter, installed at the window.

In aspects of the present disclosure, the visual representation of a window covering device may comprise at least a visual representation of one or more of a covering portion, one or more guiding rails for guiding the covering portion along the length of the window, a housing/cassette for enclosing the unexpended part of the covering portion and/or a grip profile for grabbing and moving the covering portion. The visual representation of the covering portion may be a visual representation of a fabric or slats of a venetian blind. Alternatively or additionally, the visual representation of the covering portion may include the representation item being substantially as opaque or dark as the actual covering portion when installed at the window.

In some aspects, the visual representation may be is a two-dimensional mock-up, such as a picture, a drawing or an image of a physical object. The two-dimensional mock-up may be of a visible part of the window covering device as it would appear when installed at the window, such as when viewed through the window pane. The two-dimensional mock-up may be a three-dimensional model representation of the window covering device projected onto an image plane, such as the image plane represented by the window pane as seen from a viewing perspective of the user.

The removable representation item comprising a visual representation of a window covering device may provide that an end user is able to envisage how the covering device of the type represented by the visual representation will look when installed at the window. It is advantageous that the end user is able to envisage how the covering device of the type will look before and/or without installing it, because such a visual representation makes it easier for the user to select the right covering device and thus improves the user experience when ordering covering devices for such windows.

In some aspects of the present disclosure, the visual representation may illustrate a substantially full size window covering device. By illustrating a substantially full size window covering device, the window may provide that the end user is better able to envisage how the covering device of the type represented by the visual representation being to scale.

In one or more aspects of the present disclosure, the visual representation at the removable representation item extends substantially along the entire width of the visible part of the window pane. The visual representation at the removable representation item, which prevents or reduces a view through the pane, may cover at least 30%, such as at least 40%, such as between 50% and 90%, of the surface area of the visible part of the window pane.

It is understood that the visible part of the window pane is the part of the pane that is visible, e.g. from an interior side of the window, and enables a view through the pane in the frame when the representation item is removed completely from the window. When the visible part of the window pane is substantially rectangular, the surface area is measured as the width times the height.

In one or more aspects of the present disclosure, the visual representation of the removable representation item extends along a length being at least 1/8, such as at least 1/5, such as at least 1/3, for example along at least 9/10, of the height of the visible part of the window pane.

In some aspects of the present disclosure, the removable representation item may extend substantially along the entire height of the visible part of the window pane.

In one or more aspects of the present disclosure, the window is a window to be installed at a position different from vertical, such as a roof window comprising an insulated glass unit arranged in the frame. By the window being installed at a position different from vertical, the scope of suitable window covering devices may be narrowed significantly, among others due to gravity acting on the covering device in a way that may necessitate a mechanical guiding solution of the covering device to ensure that the covering device is operated correctly when covering the window pane as desired. Such a mechanical guiding solution may be provided by installing guide rails at the frame for guiding the covering portion of the window covering device. In such cases, the removable representation item may also comprise a visual representation of such guiding rails.

In One or more aspects of the present disclosure, the removable sheet comprises one or more clear parts providing a substantially unhindered view through the pane, and a display part providing the visual representation of at least a covering portion of the window covering device, which is arranged to prevent or reduce a view through the pane.

The one or more clear parts, preferably at least one clear part being uniform and/or uninterrupted, providing a substantially unhindered view through the pane may cover at least 10%, such at least 20%, such as at least 40%, of the surface area of the visible part of the pane. At least the clear parts of the removable sheet may be made from a transparent, semi-transparent or translucent material, such as a clear plastic or polymer material, such as softened polyvinyl chloride (PVC), polyethylene terephthalate (PET) protective films or the like. The display part may be a clear or more opaque part, onto which the visual representation is printed by any number of printing methods known in the art. The display part may be arranged to prevent or reduce a view through the pane, such as by the visual representation of at least a covering portion of the window covering device appearing to provide substantially the same function as the covering portion. The covering portion of the window covering device may be arranged to prevent or reduce a view through the pane when installed at the window.

In one or more aspects of the present disclosure, the identification item may comprise a removable identification item, comprising the machine-readable identifier.

In aspects of the present disclosure, the removable representation item may comprise the removable identification item.

The removable identification item may in aspects of the present disclosure be a part of the removable representation item, such as by being removably or rigidly affixed to the removable representation item, such as by an adhesive layer abutting the representation item. By the removable representation item comprising the removable identification item, the window may provide that the identification item can be easily removed together with the representation item, such as by peeling the representation item off the window.

In some aspects of the present disclosure, at least one of the removable representation item and the removable identification item may be a removable sheet, such as a foil or plastic sheet, which is removably attached to a surface of the window pane, such as e.g. by means of a weak adhesive allowing the representation item to be peel off the window pane together with the weak adhesive. Preferably, at least the removable representation item may be a removable sheet adhering to the window pane surface. Alternatively or additionally, at least one of the removable representation item and the removable identification item may be removably or rigidly affixed to a removable sheet, such as by an adhesive layer abutting the removable sheet.

The removable sheet may in aspects of the present disclosure be a protection sheet or film attached to the window pane by means of an adhesive in order to provide mechanical protection of the pane during e.g. packaging, transportation and/or installation of the window. The removable sheet may be an innermost sheet attached directly to the window pane surface by means of a weak adhesive layer. It is contemplated that, for some choices of material of the removable sheet, electrostatic adhesion with the window pane may be sufficient for proper attachment. Typically, the sheet is then removed after installation of the window in a building or the like by peeling the removable sheet off the window e.g. in one piece.

In one or more aspects of the present disclosure, the removable identification item comprising the at least one machine-readable identifier may be placed on the window pane and/or on the removable representation item.

In one or more aspects of the present disclosure, the removable identification item comprising the machine-readable identifier may include that the at least one machine-readable identifier be part of, such as integrated in, the removable identification item. For example, the machine-readable identifier may be printed or embossed directly onto the removable representation item together with the visual representation, and hence the removable representation item also constitutes the removable identification item.

The inventors have found that using representation items and identification items which are removable allows for covering large portions of the visible part of the pane temporarily, i.e. until they are removed by a user, without encumbering the operation nor subsequent appearance of the window where the window pane is see-through. By covering a larger portion of the visible part of the pane in this way, the window may provide that the visual representation of the window covering device is of a sufficient size to allow the end user to envisage how the full-size covering device would look. It is advantageous that the visual representation is clearly observable from a distance, such as more than a meter or more than five or more than 10 meters away, because it allows the end user to envisage how the window covering device would look in combination with surrounding interior décor e.g. in case a substantially similar, real covering device is installed. Moreover, the window may provide that the removable identification item is also of a sufficient size to allow the machine-readable identifier to be reliably scanned, e.g. also from distance such as from more than 1 meter or more than 2 meters or 3 meters away or more, from the machine-readable identifier and window.

The window comprises a window pane and a frame, wherein the pane is arranged in the frame. The window may in aspects of the present disclosure be opened and closed by changing the relative position of the window pane and the frame by any number of mechanisms as is known in the art. Alternatively or additionally, the window pane may be rigidly affixed to the frame and/or locked by a latch mechanism so that the window is shut or held in position.

The pane may preferably be an insulated glass (IG) pane such as a gas insulated glass pane or a vacuum insulated glass (VIG) pane. The gas insulated glass unit may comprise a cavity between two glass sheets which is filled with argon or another gas. Generally, the insulated glass pane may comprise two, three (also called "triple pane") or more cavities separated by the glass sheets of the insulated glass unit.

In one or more aspects of the present disclosure, the identification data may comprise one or more of:
- product type information,
- product size information,
- product manufacturing information,
- product accessory category information and/or
- product material information
- identification information related to the first and/or second fastening mechanism, such as fastening mechanism type and/or generation
related to the window and/or the window covering device.

In one or more aspects of the present disclosure, the identification data comprises at least a product type and/or a product size information. The product type and size may be encoded as a sequence of characters, such as by a combination of a few letters and numerals that may have been predetermined by the manufacturer, such as e.g. by constructing a look-up table. The information may be provided directly as-is in the identification data or be represented by predetermined codes.

In some aspects, product type information and product size information may be encoded in the identification data as a sequence of characters represented by a predetermined code according to a look-up table.

The type information may comprise one or more of a window type, a window model identifier, an opening mechanism type and/or a glazing type.

The material information may comprise one or more of a window frame material, an interior colour, a thermal insulation rating and/or a covering material.

The size information may comprise at least a height measurement and/or a width measurement information of the window and/or covering device either represented directly and/or by means of a predetermined code corresponding to physical dimensions of the window so that the window size and/or covering device size such as height and/or width can be identified from the code.

In some aspects, the identification data of the window comprises one or more of window size information, window type information and/or window material information. The identification data of the window may in aspects comprise at least information of window size and a window type. Alternatively or additionally, the identification data may comprise window manufacturing information, such as model year and/or model generation. The identification data provides that the window manufacturer or vendor can reliably identify e.g. the type and/or size of window covering devices which will fit that specific window.

The product accessory category information may be a window covering device type.

The product type and size information may generally be especially suitable for identifying and/or selecting correct accessory such as covering devices for windows.

In some aspects of the present disclosure the machine-readable identifier comprises identification data of the window covering device. The machine-readable identifier may comprise physical dimensions and/or a predetermined code corresponding to physical dimensions of the window covering device illustrated by the visual representation. Alternatively or additionally, the machine-readable identifier may comprise physical characteristics and/or a predetermined code corresponding to physical characteristics of the frame and/or the window pane at which the removable representation item is arranged, such as physical characteristics of a first fastening mechanism of the frame. The identification data may comprise one or more of a product type information, a product size information, a product manufacturing information, a product accessory category information and a product material information related to the window covering device, which is illustrated by the visual representation at the removable representation item. The identification data provides that the window manufacturer or vendor can reliably identify e.g. the type and/or size of window covering devices to be made available by for purchase e.g. by the end user, and that the end user can be assured that such products fit the respective window size, type and/or generation.

In some aspects, the identification data comprises a window covering type information which corresponds to a type of the window covering device compliant with the physical characteristic of the window at which the removable representation item is arranged. The physical characteristic of the window may comprise the height and width of the visible part of the window pane. Alternatively or additionally, the physical characteristic may comprise one or more measurements and/or other information relating to a first fastening mechanism of the frame and/or a second fastening mechanism of at least one window covering device of a type represented by the visual representation at the removable representation item. By having information of the physical characteristic relating to one fastening mechanism, the identification data provides that it is possible to directly determine the physical characteristic relating to the other fastening mechanism, such that the window covering device is compliant with the physical characteristic of the window by having matching fastening mechanisms. The identification information related to the first and/or second fastening mechanism, may e.g. comprise fastening mechanism information that may comprise one or more of fastening mechanism name, type, generation and/or the like, such as a predetermined code therefore. For example the identification information of the machine readable identifier may comprise window type and/or size information, and furthermore information of the fastening mechanism type, generation, name or the like of the first fastening mechanism and/or a second fastening mechanism of the covering device that will fit the first fastening mechanism and properly engage with and fixate the covering device in the window as intended. In some occasions, windows of the same size and type may be sold over time, but the fastening mechanism type may be different e.g. due to a change in fastening mechanism generation as the first fastening mechanism of the window may be improved or changed over time. Hence the machine readable identifier may comprise identification information of the window and the first and/or second fastening mechanism in order to assure that the user is presented to a correct selection of one or more covering devices that fits the specific window comprising the machine readable identifier. In aspects of the present disclosure, the identification information may comprise a unique/specific code for a specific window size, type and/or fastening mechanism combination. This may enable identification of suitable covering device(s) to be presented to the user.

In some aspects of the present disclosure, the identification data of the window covering device may comprise one or more of an window covering size information, a window covering type information, window covering material (e.g. related to covering part material) information and/or a window covering colour (e.g. related to covering part material colour) information. The identification data provides that the end user can unambiguously identify e.g. the type and/or size of window covering devices to be purchased from a window manufacturer or vendor based on that information.

For example, the window may be supplied with one or more small covering device sample, such as one or more sample materials of a covering part of the covering device. For example, the sample may be one or more types or colours and/or material types of fabric, or slats of a venetian blind that may be designed to be a part of the covering part of the covering device. Each of these may be assigned machine readable identifier that identifies the window and/or covering device so that the covering device fits the window as e.g. described above. However, the different machine readable identifiers may be partly different in the sense that the identification data may be related to the different samples. Hence, when a user uses the user terminal to scan one of the machine readable identifiers, the user will be presented to one or more specific covering devices that fits the window as described above, and moreover comprises a covering part of the specific material that relates to the scanned machine readable identifier.

In some aspects, the removable visual representation, if present on the window upon receipt of the window, may comprise visualized material colours (by printing and/or painting) of covering parts, and each of these may be assigned an individual machine readable identifiers to enable presenting types of covering devices according to the user's wish at the user device, dependent on which machine readable identifier that is scanned on the window. It is however generally understood that no matter which of the machine readable identifier(s) on the window that is scanned, either configured to be permanent or removable, the user will be assured that the covering devices presented on the user device will fit the window comprising the scanned machine readable identifier.

In one or more aspects of the present disclosure, the machine readable identifier may be configured to be permanently maintained at the window.

In aspects of the present disclosure, the machine readable identifier may be configured to be permanently maintained at the frame. This "permanent" machine readable identifier may e.g. be placed visible when the sash is closed or may alternatively be placed at a hidden location such as between sash and frame.

In one or more aspects of the present disclosure, the machine readable identifier may be placed visible at a part of a frame of the window when the sash is closed. This may help a user to identify and use the machine readable identifier at substantially any time during the lifetime of the window. The visible machine readable identifier may be configured to be permanently maintained at the window and visible when the sash is closed/in a closed position.

A "permanent" machine readable identifier may in aspects of the present disclosure be provided by means of one or more of printing, an adhesive and/or one or more mechanical fasteners, such as by being a permanent label affixed to the frame. It may additionally or alternatively be provided by the machine readable identifier being provided, such as printed and/or engraved, directly on a part of the window, such as the frame surface. The visible machine readable identifier on the frame may be configured as a permanent label designed for "one-time application". It may be provided by a permanent printing solution, or use of a strong adhesive that creates a strong, or permanent, bond between the label and the surface. An adhesive used for the permanent label may provide a secure bond to the surface material while accommodating the environmental conditions for the window, such as resistance to temperature changes, rather high temperatures, such as above 70°C as roof windows may experience very high temperatures, moisture, chemicals during window cleaning by means of liquid and possible detergents over the lifetime of the window and/or the like. The permanent machine readable identifier may in one or more aspects of the present disclosure be configured to be resistant to sunlight and/or cleaning liquids such as water comprising a certain amount of detergent such as soap based detergent and/or alcohol containing cleaning liquid over at least the majority of the estimated lifetime of the roof window. Hence, at least 25 cleanings, such as at least 100 cleanings of the surface of the pane of the roof window arranged at the same side of the window as the permanent machine readable identifier may not influent on the readability of the machine readable identifier and/or a label material such as a sheet of material on which the machine readable identifier is located, or the label material's attachment to the frame.

In one or more aspects of the present disclosure, the window covering device may comprises one or more components configured to at least partly, such a substantially fully, hide at least a part of the "permanent" machine readable identifier in case the machine readable identifier may otherwise be visible at the window framewhen the sash is closed. This may in further aspects render the machine readable identifier inoperable when the covering device is installed at the window. The visibility/accessibility of the machine readable identifier may hence be reduced when the window covering device is installed at the window, which may provide an aesthetic advantage. This is however of minor significance as the machine readable identifier has so to say "done it's duty" and helped a user to order a covering device fitting the window and configured to be installed by means of the first fastening mechanism(s). However, if the covering device is removed again, the machine readable identifier may be more visible/accessible again, and hence e.g. allow for use again in case of e.g. a replacement of the covering device. The visibility of the machine readable identifier may be reduced at least from the inside of the building when the covering device is installed.

In one or more aspects of the present disclosure, a housing/cassette of the covering device, a connection part of the housing, such as the second fastening mechanism and/or one or more guiding rails of the covering device may together or alone provide the hiding of the machine readable identifier.

The hiding of the machine readable identifier may also occur even if the installed covering device is placed at it's substantially fully retracted position to allow as much sunlight as possible to enter through the pane and into the building.

Disclosed herein is additionally, in a second aspect of the present disclosure, a system for remote ordering of window accessories for windows for a building, wherein the system comprises:
- at least one window, wherein each window comprises:
   - a window pane and a frame, wherein the pane is arranged in the frame; and
   - an identification item comprising at least one machine-readable identifier, the machine-readable identifier comprising destination data and identification data,
- a plurality of window covering devices, and
- a server comprising:
   - a computer-readable storage medium storing a plurality of digital records of the plurality of window covering devices in a database; and
   - a hardware processor configured to receive a message representing identification data of the at least one window, identify at least one matching digital record among the plurality of digital records based on the identification data and provide a selection of window covering devices corresponding to the at least one matching digital record from the database to a user at a mobile user terminal,

wherein for at least said selection of window covering devices among the plurality of window covering devices, each window covering device in the selection of window covering devices fits the at least one window, and
wherein the at least one machine-readable identifier is configured to provide a web address based on the destination data, such as to an internet browser, when the machine-readable identifier is read by an automatic identification reader of the mobile user terminal.

It is generally understood that said system according to the second aspect may comprise and/or provide one or more of advantages mentioned above. Additionally or alternatively it is understood that any of the one or more aspects mentioned above may be provided to provide further aspects of the second aspect.

In one or more aspects of the second aspect, the at least one window may be a plurality of windows, such as more than 5 windows. In one or more aspects, said plurality of windows comprises at least a first set of windows and a second set of windows, and wherein the physical characteristics of the first set of windows are different from the physical characteristics of the second set of windows, and
wherein the identification data of the machine-readable identifier of the identification item of the first set of windows is different from the identification data of the machine-readable identifier of the identification item at the second set of windows. These identification items may comprise one or more permanent and/or removable identification items as e.g. disclosed, such as above, in one or more aspects of the present disclosure.

In some embodiments, the at least one window is a plurality of windows, such as more than 5 windows, such as more than 10, such as between 50 and 1000 windows. Alternatively or additionally, the plurality of windows may comprise windows of different sizes, types and/or materials, such as more than 10 different sizes or types. It is understood that by the remote ordering system comprising a larger variety of windows representations and moreover possibly also different variants/types of first fastening mechanisms , end users may find it increasingly difficult to identify and find suitable covering devices which fits their respective windows. The remote ordering system may provide the advantage that when a user buys such a window covering, the user is assured that it fits the respective window even if said window was initially chosen from a larger variety of windows. Moreover, since a correspondingly larger amount of different window coverings will typically also be commercially available to fit the large variety of windows commercially available, a remote ordering service may be required to reduce complexity for the user to select the right covering device. Hence, the remote ordering service provided by the server may help to provide an improved user experience for the end users by limiting options for ordering covering devices.

In one or more aspects, said different physical characteristics may include/comprise that the first set of windows have a window size different from a corresponding window size of the second set of windows. In one or more aspects, the identification data of the machine-readable identifiers of the first set of windows may be identical and/or the identification data of the machine-readable identifiers of the second set of windows may be identical.

In some embodiments, the plurality of windows comprises at least a first set of windows and a second set of windows, wherein the physical characteristics of the first set of windows are different from the physical characteristics of the second set of windows, and wherein the identification data of the machine-readable identifier of the identification item of the first set of windows is different from the identification data of the machine-readable identifier of the identification item at the second set of windows. The plurality of windows may be a window system comprising a plurality of windows of different sizes, shapes and/or types, possibly also comprising different first fastening mechanisms.

In one or more aspects, said plurality of windows may comprise a plurality of windows of a first size and a plurality of windows of a second size,
wherein the plurality of windows of the first size and/or the plurality of windows of the second size comprises different window generations, and
wherein the machine-readable identifiers placed on windows of the same size, but of different window generations, comprises different identification data.

It is generally understood, that a covering portion of the covering device may hence, in aspects of the present disclosure, have a covering width configured to extend substantially along the entire width of the visible part of the window pane when installed at said window.

The present disclosure moreover, in a third aspect, relates to a server for remote ordering of window accessories for windows for a building, wherein the server comprises:
- a computer-readable storage medium storing a plurality of digital records of a plurality of window covering devices in a database,
- a hardware processor configured to receive a message representing identification data of at least one window, identify at least one matching digital record among the plurality of digital records based on the identification data and provide a selection of window covering devices corresponding to the at least one matching digital record from the database to a user at a mobile user terminal,

wherein for at least said selection of window covering devices among the plurality of window covering devices, each window covering device in the selection of window covering devices fits the at least one window,
wherein for the at least one window, each window comprises at least one machine-readable identifier, the machine-readable identifier comprising destination data and identification data, and
wherein the at least one machine-readable identifier is configured to provide a web address based on the destination data such as to an internet browser, when the machine-readable identifier is read by an automatic identification reader of the mobile user terminal.

In one or more aspects of the third aspect, each of the said digital record in the plurality of digital records comprises metadata configured for matching said digital record to the corresponding identification data. Alternatively or additionally, the server (180) is implemented as part of a system according to any of the above mentioned aspects

In some aspects, the corresponding identification data may be encoded in the metadata as a sequence of characters represented by a predetermined code according to a look-up table. Preferably, the metadata may comprises at least a product type and/or a product size of the at least one window and/or the window covering device(s), or a predetermined code therefor .

A server according to the third aspect of the present disclosure may in some aspects be implemented as part of a system according to the second aspect of the present disclosure, and/or be a server at the web address in accordance with one or more aspects of the first aspect.

The present disclosure moreover, in a fourth aspect, relates to a further method of selecting window accessories in a system for remote ordering of window accessories for windows for a building, the system comprising:
- at least one window, wherein each window comprises:
   - a window pane and a frame, wherein the pane is arranged in the frame; and
   - an identification item comprising at least one machine-readable identifier, the machine-readable identifier comprising destination data and identification data,
- a plurality of window covering devices, and
- a server comprising:
   - a computer-readable storage medium storing a plurality of digital records of the plurality of window covering devices in a database ; and
   - a hardware processor,
wherein the method comprises the steps of, at the hardware processor:
- receiving a first message representing identification data of the at least one window from a user at a mobile user terminal;
- identifying at least one matching digital record among the plurality of digital records based on the identification data; and
- transmitting a second message representing a selection of window covering devices corresponding to the at least one matching digital record from the database to the mobile user terminal,

wherein for at least said selection of window covering devices among the plurality of window covering devices, each window covering device in the selection of window covering devices fits the at least one window, and
wherein the at least one machine-readable identifier is configured to provide a web address based on the destination data, such as to an internet browser, when the machine-readable identifier is read by an automatic identification reader of the mobile user terminal.

In one or more aspects of the fourth aspect, the method may further comprise the steps of, at the hardware processor:
- receiving a third message representing user data of the user and/or the mobile user terminal.

Identifying at least one matching digital record among the plurality of digital records may in aspects of the present disclosure be based on the identification data and the user data.

In one or more aspects of the present disclosure, the user data may include/comprise a geographical location of the user and/or the mobile user terminal. In one or more further aspects, for at least said selection of window covering devices among the plurality of window covering devices, each window covering device in the selection of window covering devices may be available for sale at and/or delivery to said geographical location.

Moreover, the present disclosure relates in a fifth aspect to a still further method of selecting window accessories in a system for remote ordering of window accessories for one or more windows, the system comprising:
- at least one window, wherein each window comprises:
   - a window pane and a frame, wherein the pane is arranged in the frame; and
   - an identification item comprising at least one machine-readable identifier, the machine-readable identifier comprising destination data and identification data,
- a server, and
- a mobile user terminal comprising:
   - a display;
   - an automatic identification reader configured to read the machine-readable identifier; and
   - a hardware processor,
wherein the method comprises the steps of, at the hardware processor:
- retrieving identification data from the machine-readable identifier by reading the machine-readable identifier via the automatic identification reader;
- transmitting a first message representing identification data obtained from the machine-readable identifier of the at least one window to the server;
- receiving a second message representing a selection of window covering devices from the server in response to the first message; and
- providing a visual representation of the selection of window covering devices to a user via the display,

wherein for at least said selection of window covering devices among a plurality of window covering devices, each window covering device in the selection of window covering devices fits the at least one window, and
wherein the at least one machine-readable identifier is configured to provide a web address based on the destination data, such as to an internet browser, when the machine-readable identifier is read by an automatic identification reader of the mobile user terminal.

In one or more aspects of the fifth aspect, the method may further comprises the step of, at the hardware processor:
- transmitting a third message representing user data of the user and/or the mobile user terminal to the server.

In one or more aspects of the fifth aspect the mobile user terminal comprises a digital camera and wherein the method further comprises the steps of, at the hardware processor:
- recording a digital image depicting one or more of the at least one machine-readable identifier via the digital camera.

In one or more aspects, the machine-readable identifier comprises a Quick Response (QR) code and wherein the automatic identification reader is a QR code scanner system, such as a QR code recognition software application installed at the mobile user terminal.

The present disclosure additionally in a sixth aspect relates to a method of providing a remote ordering online service for remote ordering of window accessories for windows for a building in a system as e.g. described according to one or more aspects above, wherein the hardware processor of the server is configured to processes one or more messages receivable from a plurality of mobile user terminals such as according to one or more of the above mentioned aspects, and wherein the hardware processor of at least one of said mobile user terminals is configured to transmit said one or more messages to the server and to processes a message received from the server in reply to said one or more messages, such as e.g. previously described.

The present disclosure additionally, in a seventh aspect, relates to a system according to one or more aspects of the above mentioned second aspect, comprising one or more computer program products comprising instructions which, when executed by the hardware processors of the system, are configured for controlling the mobile user terminal and/or the server for provisioning a method according to one or more of any one or more aspects of the first aspect, fourth aspect or fifth aspect escribed above.

Additionally, the present disclosure relates in an eighth to use of a system according to any of the preceding aspects, such as the second aspect, for providing a remote ordering online service of window covering devices for windows for a building via a communications network, such as the internet.

It is naturally understood that also for the second, third, fourth, fifth, sixth, seventh and/or eighths aspect, the window may comprise a first fastening mechanism, and a covering device that may be supplied to a user in response to a purchase provided by means of and/or based on a system, method and/or server as e.g. described above and/or below may comprise second fastening mechanisms that re configured to engage with first fastening mechanisms of the window where the machine readable identifier is provided/located.

It is generally understood that said system according to the second, third, fourth, fifth, sixth, seventh and/or eighths aspect may comprise and/or provide one or more of advantages mentioned in relation to the first aspect. Additionally or alternatively it is understood that one or more of the second, third, fourth, fifth, sixth, seventh and/or eighths aspect may comprise one or more aspects of the first aspect.

### Brief description of the drawings

Aspects of the present disclosure will be described in the following with reference to the accompanying drawings in which exemplary embodiments are shown, wherein:
Figure 1 illustrates a window comprising a frame, a window pane arranged in the frame, a removable representation item comprising a visual representation covering a part of the pane and a removable identification item comprising a machine-readable identifier according to embodiments of the present disclosure.
Figure 2 illustrates a window comprising a frame, a window pane arranged in the frame and a removable representation item comprising a removable identification item according to further embodiments of the present disclosure.
Figure 3 illustrates a window comprising a frame, a window pane arranged in the frame, a removable representation item and a removable identification item arranged at separately removable abutting layers provided at a removable sheet according to one or more embodiments of the present disclosure.
Figure 4 illustrates a perspective view of a window in the form of a pivot roof window comprising a hinge system and window covering device mounted at the window according to one or more embodiments of the present disclosure.
Figure 5 illustrates a side view of a window in the form of a top-hung roof window comprising a hinge system and a window covering device mounted at the window according to one or more embodiments of the present disclosure.
Figure 6A illustrates a window system comprising a plurality of windows comprising a first set of windows and a second set of window with each window having physical characteristics according to embodiments of the present disclosure.
Figure 6B illustrates a remote ordering system comprising a server communicatively connected to a mobile user terminal for remote ordering of window accessories for windows in a window system according to embodiments of the present disclosure.
Figure 7 illustrates a portion of a window, such as e.g. illustrated in Figs. 1-5, with a machine-readable identifier comprising a URL representation configured to provide identification data to a server at a web address when the machine-readable identifier is read by an automatic identification reader of a mobile user terminal.
Figure 8 illustrates a server comprising a computer-readable storage medium storing a database with a plurality of digital records for providing a visual representation of a selection of window covering devices when the server is communicatively connected to a mobile user terminal according to embodiments of the present disclosure.
Figure 9 illustrates details of transactions in a remote ordering system comprising a server communicatively connected to a mobile user terminal for remote ordering of window accessories for windows in a window system, such as e.g. illustrated in Fig. 6B, according to embodiments of the present disclosure.
Figure 10 illustrates the method step of identifying at least one matching digital record from a database of a plurality of digital records of window covering devices, such as e.g. illustrated further in Figs. 11-12, via a type of look-up table based on identification data and user data received from a user at a mobile user terminal.
Figure 11 illustrates a method of selecting window accessories in a system for remote ordering of window accessories for windows of a building from the point of view of a user at a mobile user terminal according to embodiments of the present disclosure.
Figure 12 illustrates a method of selecting window accessories in a system for remote ordering of window accessories for windows of a building from the point of view of a server providing a web service according to embodiments of the present disclosure.
Figure 13 illustrates a window such as a roof window with a permanent machine readable identifier and first fastening mechanisms.
Figure 14 illustrates a roof window with a machine readable identifier a first fastening mechanism, where the machine readable identifier is visible when the sash is closed.
Figure 15 illustrates a corner of a window, such as a corner of the roof window e.g. illustrated in Fig. 14, with various permanent machine readable identifiers arranged visible when the sash is closed.

### Detailed description

Exemplary examples will now be described more fully hereinafter with reference to the accompanying drawings. In this regard, the present examples may have different forms and should not be construed as being limited to the descriptions set forth herein. Accordingly, the examples are merely described below, by referring to the figures, to explain aspects. As used herein, the term "and/or" includes any and all combinations of one or more of the associated listed items. Expressions such as "at least one of," when preceding a list of elements, modify the entire list of elements and do not modify the individual elements of the list.

While the present disclosure has been described in detail in connection with only a limited number of embodiments or aspects, it should be readily understood that the present disclosure is not limited to such disclosed embodiments or aspects. Rather, the present disclosure can be modified to incorporate any number of variations, alterations, substitutions or equivalent arrangements not heretofore described, but which are commensurate in scope with the present disclosure. Additionally, while various embodiments or aspects of the present disclosure have been described, it is to be understood that aspects of the present disclosure may include only some of the described embodiments or aspects or combinations of the various embodiments or aspects. Accordingly, the present disclosure is not to be seen as limited by the foregoing description.

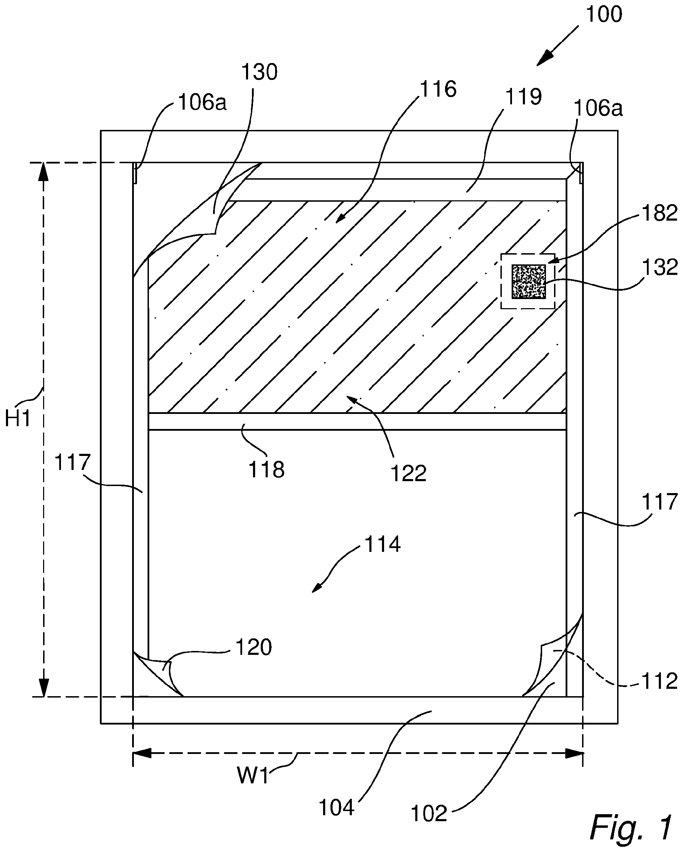

Figure 1 is a graphical illustration of a window 100 for a building, such as an architectural window, according to one or more embodiments of the present disclosure. The window 100 is shown with a window frame 104 and a window pane 102 arranged in said window frame 104. The pane 102 is shown as a substantially rectangular glass panel and has a visible part adjoining the frame, where the visible part is shown as a rectangle defined by a height H1 and a width W1. The frame 104 is shown comprising two first fastening mechanisms 106a provided at the upper corners of the frame 104 for mounting accessories, such as covering devices.

A removable representation item 120, such as a printed plastic film, is shown removably attached to the surface of the window pane 102 at an interior side of the window 100. The representation item 120 is attached to the surface of the window pane 102 by a weak adhesive film (not illustrated) between the representation item 120 and the pane 102. The representation item 120 is shown comprising a visual representation 122 of a window covering device 110 (not illustrated) installed at the window 100. The removable representation item 120 is shown covering the visible part of the window pane 102, so that a display part 116 of said covered area provides the visual representation 122 and a clear part 114 provides a substantially unhindered view through the pane 102. The display part 116 is shown as opaque and/or generally less transparent than the clear part 114, which is transparent or at least translucent. The visual representation 122 illustrates two guide rails 117, a grip profile 118 and a housing 119 of the window covering device 110 (not illustrated). The guide rails 117 are shown extending along a longitudinal extent of the window frame 104, where the visible part of the pane 102 meets the window frame 104. The grip profile 118 is also shown extending along a transversal and/or substantially horizontal direction across the pane 102 between two opposite sides of the window frame 104. As shown here, the visual representation 122 hereby provides a decent two-dimensional mock-up of the window covering device 110 (not illustrated) in the form of interior blinds as they would appear if installed at the window 100 and viewed through the pane 102. It is contemplated that the display part 116 could have a printed pattern or be otherwise textured to look like a textile or a non-woven fabric typically used in roller blinds. Further, the visual representation 122 shown need not be photorealistic nor provide a complete graphical rendering or reproduction of the type of window covering device 110 (not illustrated) illustrated by the visual representation 122, as long as the user is helped to a reasonable understanding of how the window 100 would look with that type of window covering device 110 (not illustrated) installed at the window 100.

A removable identification item 130 is likewise shown removably attached at the surface of the window pane 102 at an interior side of the window 100. Similarly, the identification item 130 is attached at the surface of the window pane 102 by a weak adhesive film (not illustrated), such as between the identification item 130 and the representation item 120 or between the identification item 130 and the pane 102. The removable identification item 130 is shown comprising at least one machine-readable identifier 132. The machine-readable identifier 132 provides machine-readable data, such as window identification data or data relating to the window manufacturer or a vendor, which helps to improve the user experience when an end user wants to order window accessories, such as window covering devices, by using or relaying the data. The machine-readable identifier 132 of the present embodiment is a QR code which comprises data in the form of a web address 182 which is directed to an online store. At this online store, consumers like the end users can purchase window accessories, such as interior blinds, suitable for that window 100. By directing the end user to an online store specifically offering for sale that type of window covering device 110 (not illustrated) which is illustrated by the visual representation 122 at the window 100, the end user may be provided with an enhanced user experience by both being assured that the type fits the window 100 and understanding how it will look.

A removable sheet 112 is shown removably attached the surface of the window pane 102 at an exterior side of the window 100 and arranged to be substantially opposite the removable representation item 120 and/or the removable identification item 130. Optionally, the removable sheet 112, such as clear plastic or polymer film, shown here removably attached over at least the visible part of the window pane 102, such as over the removable representation item 120, may be separately removed after the installation of the window e.g. by a glazier prior to the end user viewing the visual representation 122. It is contemplated that clear and durable removable sheets 112 may be arranged as two outermost protective layers entirely covering the visible part of the pane 102, and that the removable sheets 112 may be peeled off while leaving the removable representation item 120 and/or the removable identification item 130. Such an arrangement of removable sheets 112 may provide that neither the pane 102, the removable representation item 120 nor the removable identification item 130 are damaged during packaging, transportation and/or installation of the window 100.

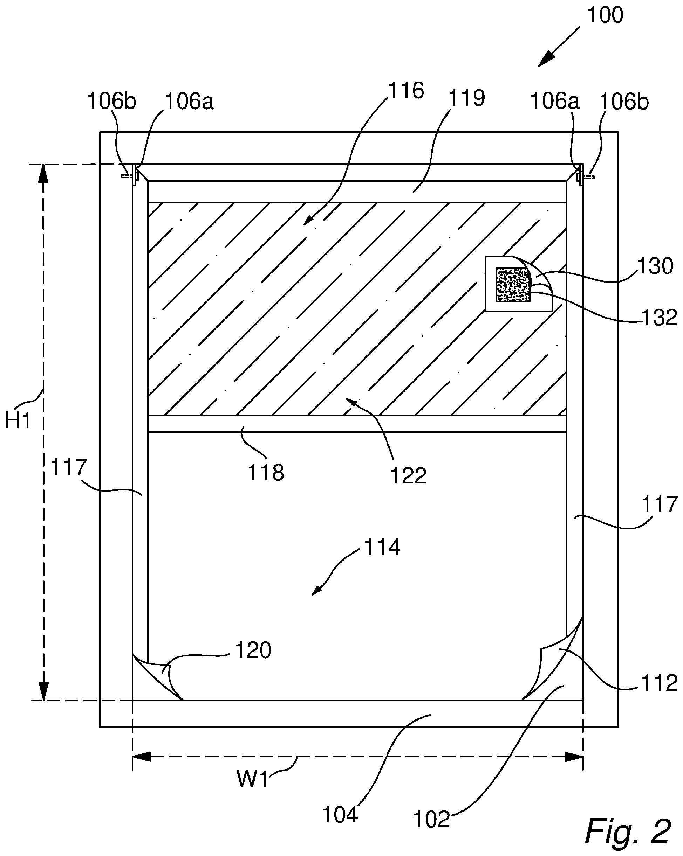

Figure 2 is a graphical illustration of a window 100 in an embodiment of the present disclosure, wherein the window 100 comprises a frame 104, a pane 102 arranged in the frame 104 and a removable representation item 120. The representation item 120 likewise comprises a visual representation 122 of a window covering device 110 (not illustrated) installed at the window 100 at a display part 116, as e.g. also described in relation to Fig. 1 above. The removable representation item 120 is shown comprising a removable identification item 130, which covers only a fraction of the display part 116 which provides the visual representation 122. The frame 104 is likewise shown comprising two first fastening mechanisms 106a provided at the upper corners of the frame 104 for mounting a type of window covering device 110 (not illustrated) and the upper corners of the visual representation 122 here illustrate two corresponding second fastening mechanisms 106b, such as screws for rigidly affixing a pair of brackets to the window frame 104.

A removable sheet 112, such as a foil or plastic sheet, is shown removably attached to a surface of the window pane 102 at an interior side of the window 100. The sheet 112 is attached to the surface of the window pane 102 by a weak adhesive film (not illustrated) between the sheet 112 and the pane 102, so that the removable sheet 112 provides a protective layer covering the entire visible part of the window pane 102. The removable representation item 120 shown here is a part of the removable sheet 112 attached at the window pane 102, such as by the removable representation item 120 being a thin film of ink or colour pigment printed on the removable sheet 112. The removable sheet 112 hereby provides that the representation item 120 and/or the identification item 130 can be removed from the window pane 102 without residue.

The removable representation item 120 is shown removably attached to the surface of the window pane 102 at an interior side of the window 100, as e.g. also described above in relation to Fig. 1, but the removable identification item 130 is here shown removably attached to the removable representation item 120, such as with a weak adhesive between at the identification item 130 and the representation item 120. The removable identification item 130 also comprises a machine-readable identifier 132 and is generally smaller, as e.g. compared to the removable identification item 130 described above in relation to Fig. 1, such as e.g. a 10 x 10 cm QR code sticker. By the removable identification item 130 being removable attached to representation item 120, the end user may peel off this identification item 130 to use the machine-readable identifier 132 elsewhere and leave the representation item 120 in place. This may provide the advantage that the window 100 is left with a general appearance of having a window covering device 110 (not illustrated) installed at the window 100 due to the visual representation 122 while the end user waits for the purchased type of window covering device 110 (not illustrated) to arrive and/or be installed.

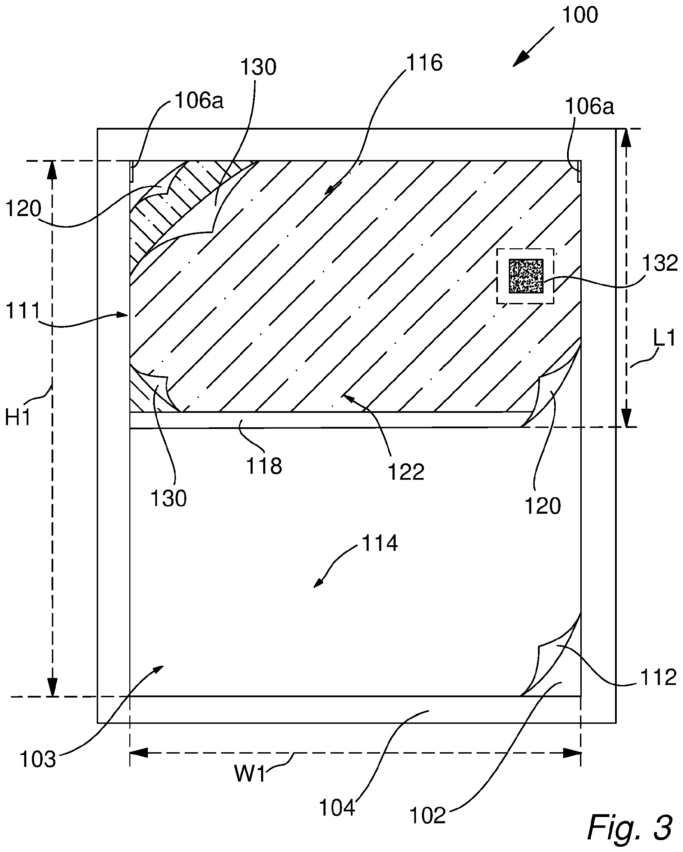

Figure 3 is a graphical illustration of a window 100 in another embodiment of the present disclosure, wherein the window 100 likewise comprises a frame 104, a pane 102 arranged in the frame 104 and a removable representation item 120. Further, the representation item 120 comprises a visual representation 122 of a window covering device 110 (not illustrated) installed at the window 100 at a display part 116, as e.g. also described in relation to Figs. 1-2 above. The removable representation item 120 is shown comprising a removable identification item 130, which covers a majority of the display part 116 which provides the visual representation 122. Here, the window covering device 110 (not illustrated) illustrated by the visual representation 122 also comprises a grip profile 118 but no guide rails 117 or housing 119 is shown.

A removable representation item 120 is shown covering an upper part of the pane 102 and/or the removable sheet 112. The removable representation item 120 extends along a length L1 measured from the top of the window frame 104 to the bottom of the grip profile 118 illustrated by the visual representation 122 of the representation item 120 as placed at the window. The length L1 is generally less than the height H1 of the visible part 103 of the pane 102, and typically a considerable fraction, e.g. 1/2, to display the covering part 111 of the window covering device 110 (not illustrated).

A removable sheet 112, such as a foil or plastic sheet, is shown removably attached to a surface of the window pane 102 at an interior side of the window 100. The sheet 112 is attached to the surface of the window pane 102 by a weak adhesive film (not illustrated) between the sheet 112 and the pane 102, so that the removable sheet 112 provides a protective layer covering the entire visible part of the window pane 102.

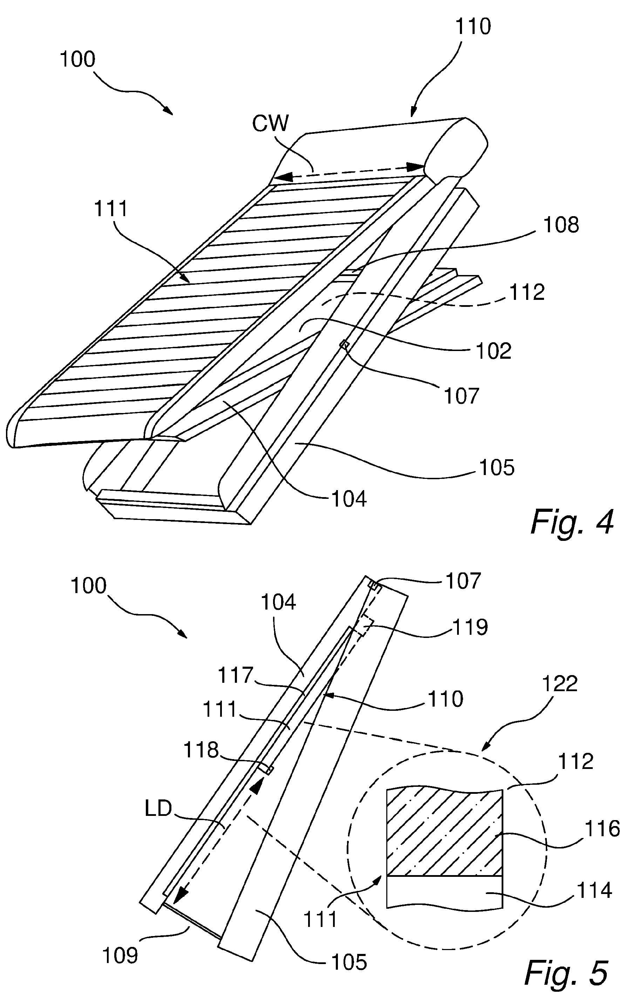

Figure 4 is an illustration of a perspective view of a window 100 to be installed at a roof of a building. The roof window 100 comprises a window frame 104, a pane 102 arranged in the frame 104, a hinge system 107 arranged between the window frame 104 and a fixation frame 105 arranged to receive the frame 104. In the example of Fig. 4, the roof window 100 is a pivot roof windows comprising pivot hinges 107 providing an axis of rotation between the top and bottom end of the frame 104. The pivot roof window 100 comprises a frame 104 in the form of a movable sash 108, which is connected to the fixation frame 105 by means of the hinge system 107, such as one or more hinged connections configured to allow the sash 108 to move relative to the fixation frame 105. Often the axis of rotation is substantially about the centre, but sometimes the axis of rotation can for example be raised such as 1/3 of the total window or sash height. The hinge system 107 is arranged so that a top end part of the sash 108 is configured to move inwards while a bottom end part of the sash 108 is configured to move outwards when opening the window 100 from a closed position. The roof window 100 is configured to be placed in a roofing structure of a building, such as a building for habitants, an office building or the like. The roof window 100 may in embodiments of the present disclosure be arranged between two roof trusses, but may in further embodiments also be arranged at another part of the roof structure. The pivot roof window 100 may either be configured to be arranged with an angle between 5° and 85°, such as between 10° and 75°, compared to horizontal, so that rain and melting water, dew and the like will be guided towards a bottom end part of the pivot roof window 100 due to gravity without permitting water ingress.

A pivot roof window 100 may e.g. allow partial rotation of the movable sash 108 so the surface of the window pane 102 at an exterior side of the pivot roof window 100 may be cleaned from the inside. The weather proofing and water drain for such roof windows 100 should be carefully designed, especially for pivot roof windows 100 that can be opened, which may affect the availability of compatible architectural coverings that can be installed at the respective type of pivot roof window 100.

The pivot roof window 100 is shown with an architectural covering installed at an exterior side. The architectural covering is shown as a window covering device 110, which in the present example is a roller shutter, but it may also be a blind such as a venetian blind, a roller blind or the like in further embodiments. The roller shutter may be electrically operated by means of an electric motor (not illustrated), so as to open or close the roller shutter and controlled by an automation solution and/or by means of a wired or wireless remote control. As can be seen, the roller shutter can be placed at the exterior side of the window, and a covering part 111 can be extended or retracted along a longitudinal direction of the window covering device 110 while at least a housing of the window covering device 110, e.g. at the top end part, remains stationary. It is understood that in further embodiments of the present disclosure, the roller shutter and/or other types of architectural coverings may be omitted from the window 100. The window pane 102 may instead be covered by a removable sheet 112 to provide a visual representation 122 (not shown) of at least the covering part 111, as e.g. described above in relation to Figs. 1-3, to be viewed by an end user.

Figure 5 is an illustration of a side view of a roof window 100 according to another embodiment of the present disclosure, wherein the roof window 100 is a top-hung roof window. The top-hung roof window 100 comprises a window frame 104, a pane 102 (not shown) arranged in the frame 104, a hinge system 107 arranged between the window frame 104 and a fixation frame 105 arranged to receive the frame 104. Here, the frame 104 is connected to the fixation frame 105 at the top part by a hinge system 107, and the top part of the frame 104 does not pivot inwards when the window 100 is opened from a closed position. A latch mechanism 109 is shown at the bottom part of the frame 104, where the latch mechanism 109 is engaged with a corresponding receiving mechanism (not shown) at the bottom part of the fixation frame 105 so that the window 100 can be mechanically actuated, shut or held in position.

Generally, for some types of roof windows 100, such as e.g. illustrated in relation to Figs. 4 and 5 above, the roof window 100 may be installed with an electric actuator (not shown) such as a spindle actuator or chain actuator. The electric actuator can be controlled or operated via input from an automation system or a user interface via a wired or wireless remote control to open or closed the window 100. Similarly, some types of window covering devices 100, such as roller blinds or exterior shutters, may be installed with an electric actuator which can be controlled or operated in this way.

The top-hung roof window 100 is shown with an architectural covering installed at an interior side. The architectural covering is shown as a window covering device 110, which in the present example is roller blinds, but it may also be venetian blinds, slats or the like in further embodiments. The window covering device 110 is shown with a covering portion 111 drawn approximately mid-way between the top part and bottom part of the window frame 104 along a longitudinal direction LD. The window frame 104 has one or more guiding rails 117 for guiding at least the covering portion 111 and to keep the covering part 111 along the length of the window frame 104. The window covering device 110 comprises a housing 119 for enclosing the unexpended part of the covering portion 111 and a grip profile 118 for grabbing and moving the covering portion 111, such as by linear extension during manual operation by a user.

The circular inset in Fig. 5 shows a visual representation 122 of the window covering device 110 installed at the top-hung roof window 100 as it would look when viewed from an interior side of the top-hung roof window 100 by an end user. Such a visual representation 122 may be provided at a removable sheet 112 attached to the window pane 102 (not shown) of the top-hung roof window 100, as e.g. described in relation to Figs. 1-3 above. The removable sheet 112 has a display part 116, which provides a graphical representation of at least the covering portion 111 of the window covering device 110. The removable sheet 112 also has a clear part 114, which may provide a substantially unhindered view through the pane 102 (not shown). It is understood that, a removable representation item 120 (not shown) and a removable identification item 130 (not shown) may be provided e.g. by the removable sheet 112 being a foil or plastic sheet removably attached to a surface of the window pane 102 (not shown), whereby one or more of the effects or advantages discussed above may be provided.

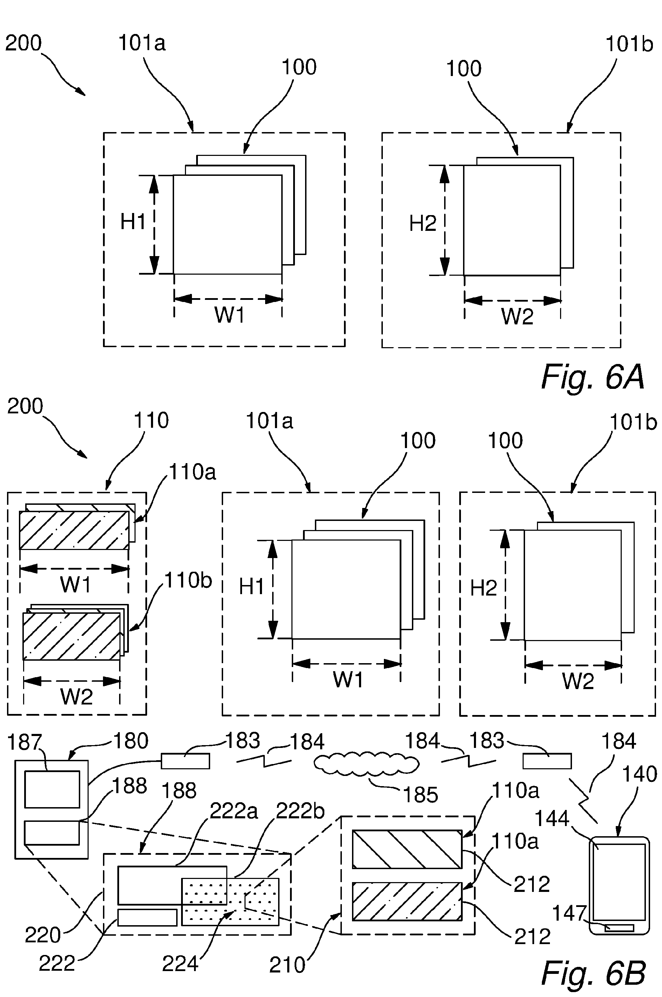

Figure 6A is a graphical illustration of a window system 200 comprising a plurality of windows 100, such as at least ten windows 100, such as more than 50 windows 100. The plurality of windows 100 comprises a first set of windows 101a, here shown as three identical windows 100 of a first size, and a second set of window 101b, shown as two identical windows 100 of a second size. Each window 100 is shown having physical characteristics comprising a height H1,H2 and a width W1,W2 according to embodiments of the present disclosure, such as e.g. described in relation to Figs. 1-3. It is understood that the first size is described at least in part by height H1 and width W1 measured as shown for the three identical windows 100 of the first size. Further, the second size is described at least in part by height H2 and width W2 measured as shown for the two identical windows 100 of the second size, and it is understood that the second size being different from the first size may include that at least the height H1 is different from the height H2 or the width W1 is different from the width W2.

Figure 6B is a graphical illustration of a remote ordering system 200 of window accessories 110,110a,110b comprising a server 180 communicatively connected to a mobile user terminal 140 via a communications network 185. The remote ordering system 200 provides an online remote ordering service 240 (not shown) of window accessories in the form of window covering devices 110,110a,110b for windows 100 of a building 242 (not shown) according to one or more embodiments of the present disclosure, such as e.g. illustrated in relation to Figs. 1-5 above. Further, the remote ordering system 200 shown here comprises a plurality of windows 100 comprising a first set of windows 101a and a second set of windows 101b according to aspects or embodiments of the present disclosure, such as e.g. illustrated in relation to Fig. 6A.

Additionally, the remote ordering system 200 shown here comprises a plurality of window covering devices 110 comprising a plurality of first window covering devices 110a and a plurality of second window covering devices 110b, wherein the first window covering devices 110a fit the windows 100 in the first set of windows 101a by each first window covering devices 110a having a width W1 corresponding to the widths W1 of the visible part of the window panes in the windows 100 of the first set of windows 101a, and wherein the second window covering devices 110b fit the windows 100 in the second set of windows 101b by each of the second window covering devices 110a having another width W2 corresponding to the widths W2 of the visible part of the panes in the windows 100 of the second set of windows 101b.

The communications network 185 is shown relaying messages 184 between the server 180 and the mobile user terminal 140 via a plurality of network interface devices 183 configured to relay each messages 184 onwards in the communications network 185 towards an intended destination by any mechanisms known in the art. The server is shown connected to a first network interface device 183 via a wired connection, such as a Local Access Network (LAN) cable, and the mobile user terminal 140 is shown connected to a second network interface 183 via a wireless connection, such as a Wireless LAN (WLAN) based on IEEE 802.11 standards etc. Alternatively or additionally, the mobile user terminal 140 may be connected to the communications network 185 via a wireless mobile telecommunications connection, such as a broadband cellular network based on IEEE 802.16 standards or the like. The communications network 185 provides that the server 180 and the mobile user terminal 140 may be communicatively connected without being at the same physical location, although they may be in some embodiments. A user 148 (not shown) may interact with the mobile user terminal 140 via a display 144, for example providing an ordering interface 146 (not shown) via an internet browser 145 (not shown) or any suitable kind of touch-screen user interface, to thereby interact with the server 180. It is generally understood that the display 144 of a mobile user terminal 140, such as a smartphone, may allow bidirectional user interaction via a touch-screen capability to simultaneously display information and receive control input via user interaction.

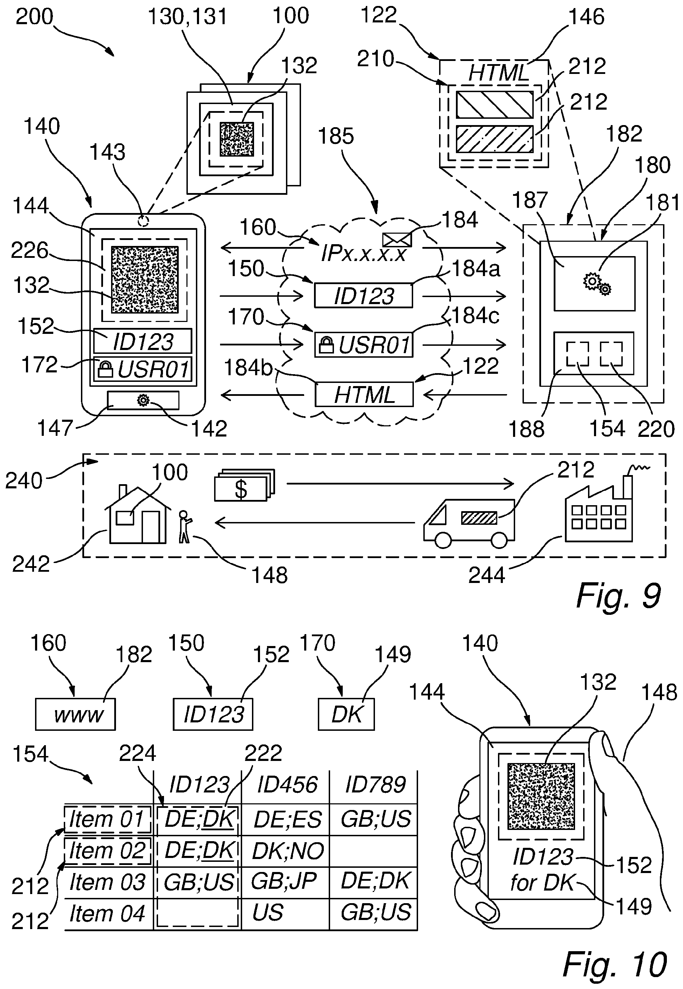

The server 180 comprises a hardware processor 187 and a computer-readable storage medium 188 and is communicatively connected to the communications network 185 via a network interface device 183, such as provided by an Internet Service Provider (ISP). The computer-readable storage medium 188 is shown storing a database 220 over a plurality of digital records 222,222a,222b of the plurality of window covering devices 110,110a,110b. Further, a matching digital record 224 has been identified among the plurality of digital records 222,222a,222b to be one digital record 222b of particular relevance, such as e.g. by the method step illustrated in relation to Fig. 9. The matching digital record 224 provides data representing a selection of window covering devices 210 comprising a plurality of selected window covering devices 212. Each selected window covering device 212 may be selected from the plurality of window covering devices 110,110a,110b by the identification of the appropriate matching digital record 242, such as e.g. illustrated in relation to Fig. 9 below. Here, the selection of window covering devices 210 is shown to include two different types of selected window covering devices 212 represented by the type of the first window covering devices 110a and the type of the second window covering devices 110b.

The server 180 is shown providing said selection of window covering devices 210 corresponding to the at least one matching digital record 224 from the database 220 to a user 148 (not shown) at the mobile user terminal 140 by exchanging messages 184 with the mobile user terminal 140 via the communications network 185. Hereby, the remote ordering system 200 is enabled to offer various types of window covering devices 110,110a,110b by providing a suitable selection of window covering devices 210 which fits the respective windows 100 in either the first set of windows 101a or the second set of windows 101a based on the identification data 150 (not shown).

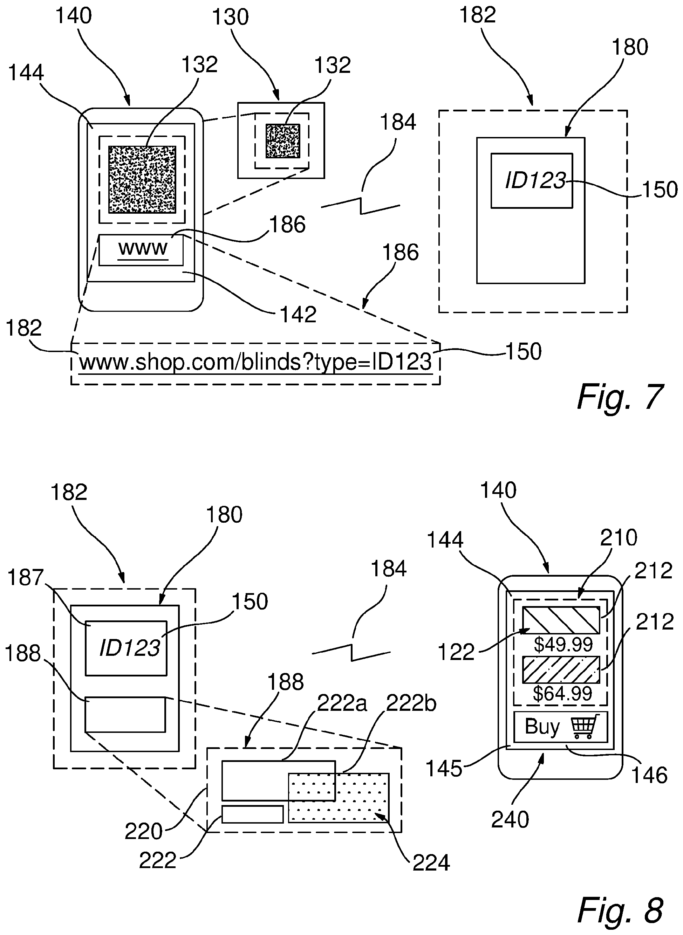

Figure 7 is a graphical illustration of a removable identification item 130 from a portion of a window 100 according to one or more embodiments of the present disclosure, such as e.g. illustrated in relation to Figs. 1-5 above, with a machine-readable identifier 132 being read by an automatic identification reader 142 of a mobile user terminal 140, such as a smartphone held and/or operated by a user. The machine-readable identifier 132 may be scanned and read automatically or manually as a result of user interaction via a user interface at the mobile user terminal 140. The machine-readable identifier 132 is shown as a QR code, which can be scanned by the mobile user terminal 140 recording or receiving a digital image of the QR code via a digital camera, such as typically provided in a smartphone, tablet or the like.

A display 144 is provided at the mobile user terminal 140 so that an automatic identification reader 142 installed at the mobile user terminal 140 may provide information and/or enable user interaction, such as via a touch screen interface. It is understood that the mobile user terminal 140 may comprise a hardware processor and other electronic components for carrying out the functions e.g. described above, such as performing QR code recognition, data processing and information retrieval, such as providing information and/or enabling user interaction at the display 144.

The machine-readable identifier 132 is shown comprising a URL representation 186. The URL representation 186 is shown configured to provide identification data 150, such as e.g. window identification data relating to the window 100 from which the identification item 130 was removed, to a server 180 at a web address 182 by the web address 182 and the identification data 150 forming a http GET request string. The server 180 may fulfil the http GET request by providing a web page result which is based at least in part on the identification data 150 to provide the user with an improved the user experience for users that may have a desire of purchasing window accessories, such as window covering devices 110, for the respective window 100.

The web address 182 is shown comprising the identification data 150 in the form of a predetermined code e.g. "ID123" representing a window model, type or the like. An internet browser 145 (not shown) installed at the mobile user terminal 140 may allow the server 180 to receive a message 184 representing said identification data 150 by a user 148 (not shown) choosing to visit said web site 182 via user interaction directing the internet browser 145 (not shown) to said URL representation 186. Alternatively or additionally, visiting said web site 182 may occur automatically as a result of the previous user interaction via the automatic identification reader 142 or the like. It is understood that e.g. the text shown as "ID123" may be represented as binary data in any form suitable for digital communication and may be compressed or encrypted.

Figure 8 is a graphical illustration of a server 180 comprising a hardware processor 187 and a computer-readable storage medium 188 storing a database 220 having a plurality of digital records 222,222a,222b of a plurality of window covering devices 110,110a,110b according to embodiments of the present disclosure. The server 180 provides a remote ordering service 240 in a remote ordering system 200 (not shown), such as e.g. illustrated in relation to Fig. 6B. The remote ordering service 240 is here shown at a display 144, such as a touch-screen display, of a mobile user terminal 140 providing a visual representation 122 of a selection of window covering devices 210. The visual representation 122 may for example be a web page result responsive to an http GET request string, as for example discussed in relation to Fig. 7 above.

In this example, the display 144 is presenting an ordering interface 146 to a user 148 (not shown) via an internet browser 145 installed at the mobile user terminal 140. As part of the ordering interface 146, a selection of window covering devices 210 may have been provided by the server 180 based on identification data 150, such as by a predetermined code e.g. "ID123" representing a window model, type or the like. The selection of window covering devices 210 is provided in the form of a message 184 representing said selection of window covering devices 210, which corresponds to data based on at least one matching digital record 224 from the database 220. It is understood that the message 184 may comprise digital data in any format suitable for providing a visual representation 122 at the display 144, such as Hypertext Markup Language (HTML) data for rendering web page results via an internet browser 145.

The ordering interface 146 may include pricing information of each selected window covering device 212 in the selection of window covering devices 210 and may also include a purchasing mechanism, such as represented by a "Buy" web page button. It is understood the server 180 may also be communicatively connected to other online services (not shown) via a communications network 185 (not shown) in addition to the one or more mobile user terminals 140 according to embodiments of the present disclosure. For example, such other online services may include electronic payment services, regional shipping services, warehouse inventory systems or the like.

Figure 9 is a graphical illustration of the details of transactions in a remote ordering system 200 comprising a server 180 communicatively connected to a mobile user terminal 140. The remote ordering system 200 is shown providing a remote ordering service 240 for remote ordering of window accessories 110,110a,110b (not shown) for at least one window 100 of a building 242, such as e.g. illustrated in Fig. 1-5, according to embodiments of the present disclosure.

The at least one window 100 comprises an identification item 130,131 comprising a machine-readable identifier 132. A mobile user terminal 140 operated by a user 148 interested in purchasing window accessories for windows 100 is here shown having acquired a digital image 226 depicting a machine-readable identifier 132 in the form of a QR code via a digital camera 143 provided at the mobile user terminal 140, such as by the user 148 directing said digital camera 143 to point at the QR code 132. An automatic identification reader 142 is shown installed at the mobile user terminal 140 and providing instructions which, when executed by a hardware processor 147 of the mobile user terminal 140, are configured for reading the machine-readable identifier 132 and provide information relating to read data to the user 148 via a display 144.

Typically, an automatic identification reader 142 in the form of a QR code scanner system may for example display a representation of a QR code 132 read in this way via the digital image 226, which notifies the user 148 that data was read correctly. It is generally understood that using the digital camera 143 is initiated by the user 148. Alternatively or additionally, the mobile user terminal 140 may comprise one or more electronic sensors suitable for reading a machine-readable identifier 132, such as e.g. RFID sensors, NFC sensors or any suitable means of machine perception.

The mobile user terminal 140, shown here in the form of a smartphone or the like, is further provided with instructions which, when executed by the hardware processor 147 of the mobile user terminal 140, are configured for retrieving identification data 150, shown here in the form of a predetermined code 152 e.g. as "ID123", from the machine-readable identifier 132 when read by the QR code scanner system 142. The instructions may be configured to provide a web address 182, such as to an internet browser 145 (not shown), based on destination data 160 retrieved from the machine-readable identifier 132 when read by the QR code scanner system 142. Destination data 160, here in the form of a web address 182 of the server 180, enables messages 184,184a-c to be exchanged between the server 180 and the mobile user terminal 140 via the communications network 185, such as by assigning each message 184 with a destination IP address e.g. as "IPx.x.x.x", by any suitable means known in the art. A first message 184a representing the identification data 150 is shown transmitted from the mobile user terminal 140 and received by the server 180 in this way.

The instructions may further be configured for providing user data 170, shown here in the form of a tracking cookie 172 e.g. as "USR01", to the server 180 via a third message 184c which enable user personalization of transactions in the system 200. A third message 184c representing the user data 170 is also shown transmitted from the mobile user terminal 140 and received by the server 180 in this way. In other aspects, the first message 184a comprises the third message 184c, parts thereof or vice versa. Typically, the user data 170 is encrypted to protect personal or sensitive information and can only be decrypted by the server 180, e.g. using public- key cryptography.

The server 180 comprises a computer-readable storage medium 188 shown storing a database 220 and a look-up table 154, as for example discussed in relation to Figs. 8 and 10, respectively. A web service manager 181 is shown installed at the server 180 and providing instructions which, when executed by a hardware processor 187 of the server 180, are configured for receiving and processing the messages 184, 184a, 184c, such as e.g. discussed in relation to Figs. 6B and 7-8 above. The server 180 is shown providing a visual representation 122 of a selection of window covering devices 210 to the user 148 at the mobile user terminal 140 by transmitting a second message 184b to said mobile user terminal 140 in response to the first message 184a. The web service manager 181 is shown further providing instructions which, when executed by a hardware processor 187 of the server 180, are configured for presenting the user 148 with an ordering interface 146, e.g. as HTML, for remotely ordering one or more selected window covering devices 212. The remote ordering service 240 thus enables the user 148 to purchase and have delivered a selected window covering device 212 from a manufacturer 244, e.g. by completing a monetary transaction or the like.

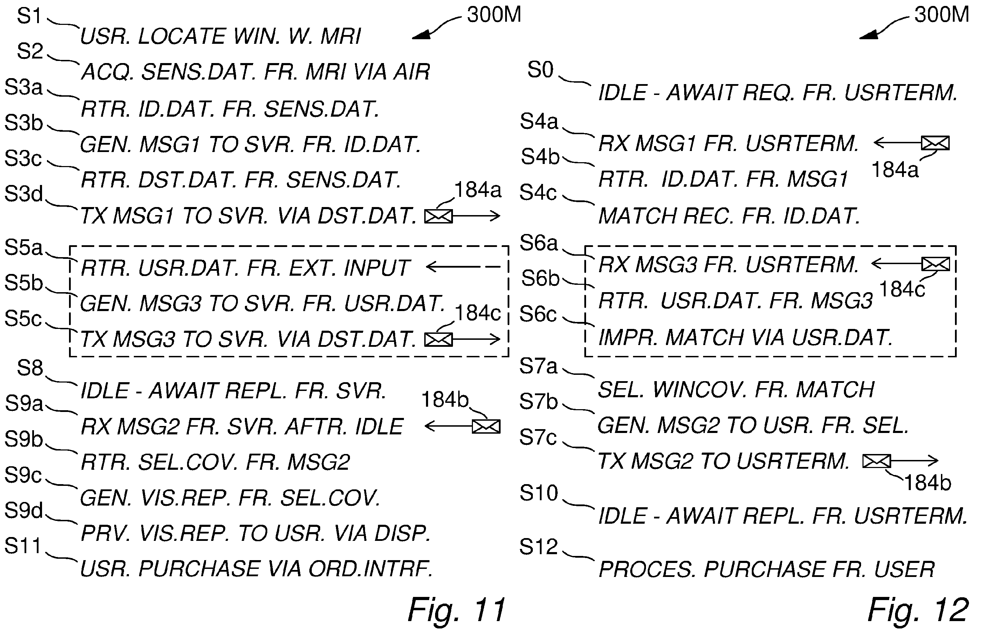

Figure 10 is a graphical illustration of the method step S4c of identifying at least one matching digital record 224 from a database 220 of a plurality of digital records 222 of window covering devices, such as e.g. illustrated further relation to Figs. 11-12. A matching digital record 224 is shown being identified via a look-up table 154 based on identification data 150 in the form of a predetermined code 152 and user data 170 in the form of a geographical location 149 of a user 148. The identification data 150 and user data 170 may be received as messages 184 (not shown) from a mobile user terminal 140, as for example discussed in relation to Figs. 7 and 9 above.

The identification data 150 is shown comprising a sequence of characters, e.g. as "ID123" representing a predetermined code 152, which may be decoded into product type information and product size information according to the look-up table 154. A matching column in the look-up table 154 with the corresponding header "ID123" is identified based on the identification data 150, whereby at least one matching digital record 224 is identified among the plurality of digital records 222 (not shown) in the database 220 (not shown). The at least one matching digital record 224 may provide further selection criteria for choosing which selected window covering devices 212 to be provided in the selection of window covering devices 210 (not shown). For example, each cells of the look-up table 154 is shown comprising a listing of which geographical locations, if any, a selectable window covering device 110 represented by that row/column combination is available for sale and/or delivery to the user 148. In this context, each column may for example represent matching identification data for a type of window 100, as for example discussed in relation to Figs. 1-5 above. A row may then represent any selectable window covering device 110, which may or may not fit that particular type of window 100. An empty cell may then represent a row/column combination where that selectable window covering device 110 does not fit the respective type of window 100, and should therefore not be selected based on the identification data 150. A non-empty cell with a list of available geographical locations which includes the geographical location 149 of the user 148, e.g. as "DK" being part of the list shown as "DE;DK", then represents a row/column combination where that selectable window covering device 110 both fits the respective type of window 100 and is available for sale and/or delivery to the user 148, and hence that selectable window covering device 110 should therefore be selected based on the identification data 150 and the user data 170. Accordingly, two rows corresponding to two different selected window covering devices 212 are shown as selected based on having cells of the matching column in the look-up table 154 which fulfil such selection criteria. It is understood that, without user data 170, selecting cells in all the rows and the matching column may be necessary, hence offering a potentially more complex user experience. The user data 170 thus provide additional selection criteria thereby improving the user experience by only providing selected window covering devices 212 which are relevant for end users 148 at that geographical location 149.

Figure 11 is an illustration of processing steps of a method 300M for selecting window accessories 110,110a,110b for windows 100 of a building 242 to be performed at a hardware processor 147 of a mobile user terminal 140 in a remote ordering system 200 according to one or more embodiments of the present disclosure. The method steps are shown from the point of view of a user 148 interacting with a mobile user terminal 140, such as e.g. discussed in relation to Figs. 7-10 above. It is understood that other processing steps may be carried out by a server 180 in said remote ordering system 200 to complete transactions in the remote ordering service 240 thereby being provided, and that the other processing steps may be carried out by another hardware processor 187 in parallel and/or co-dependence on the processing steps shown here. For example, Fig. 12 illustrates such supporting method steps shown from the point of view of a server 180 interacting remotely with said mobile user terminal 140 via messages 184a-c exchanged via a communications network 185, such as the internet. Accordingly, Figs. 11-12 may be perceived as compatible views of the method 300M.

In an initial step S1 for the point of view of the user 148 at the mobile user terminal 140, the user 148 locates at least one window 100 with a machine-readable identifier 132 such as by visual inspection. During this step S1, the processor 147 of the mobile user terminal 140 may be configured, e.g. by the user 148, to load instructions which, when executed by said hardware processor 147, are configured to perform functions of an automatic identification reader 142. For example, the user 148 may recognize by visual inspection that the machine-readable identifier 132 is in the form of a QR code and take steps to activate an automatic identification reader 142 in the form of a QR code recognition software application installed at the mobile user terminal 140. In step S2, subsequent to step S1, sensor data is acquired from the machine-readable identifier 132 by a suitable sensor at the mobile user terminal 140, such as acquiring a digital image 226 of a QR code 132 via a digital camera 143 or the like. Acquiring such sensor data may for example be initiated as a result of executing the instructions provided for the hardware processor 147 by the automatic identification 142 and/or may include a manual step to be performed by the user 148 to facilitate acquisition. It is generally understood that the user 148 is both aware of and familiar with such use.

After successful acquisition of sensor data from the machine-readable identifier 132 by the mobile user terminal 140 in step S2, the identification data 150 is retrieved from the machine-readable identifier 132 in step S3b by the automatic identification reader 142 reading and processing information in said sensor data from the machine-readable identifier 132. For example, the sensor data may include a digital image 226 depicting a QR code 132 and the information encoded in said QR code 132 may be a sequence of binary digits, such as a two-dimensional matrix of squares representing bits with each dark square representing '1' and each light square representing '0'. It is understood that reading and processing information in sensor data obtained from a machine-readable identifier 132 may include additional steps not shown here, such as e.g. segmentation, distortion correction, thresholding etc. on digital images 226. The information encoded in a QR code 132 may be digital data in the form of plain text, such as e.g. an URL representation 186 of the web address 182 of the server 180. As generally set forth in the disclosure of the first and third aspects and further discussed in relation to Figs. 7 and 9 above, this information may comprise both identification data 150 and destination data 160, such as the web address 182 of the server 180. In step S3b, subsequent to step S3a, a first message 184a is generated representing the identification data 150 retrieved in step S3a. The first message 184a may represent identification data 150 by for example encoding a predetermined code 152 in a http GET request string, such as e.g. discussed in relation to Figs. 7 and 9 above. In step S3c, the destination data 160 is retrieved from the machine-readable identifier 132. For example, destination data 160 may be retrieved by the automatic identification reader 142 reading and processing information similarly to step S3a. Alternatively or additionally, the identification data 150 and the destination data 160 may be retrieved simultaneously where such data is intrinsically linked, so that steps S3a and S3c must be carried out in unison. In step S3d, subsequent to step S3c, the first message 184a representing identification data 150 is transmitted to be received at the server 180 via the communications network 185, such as by the first message 184a being relayed to the server 180 via the destination data 160 through intermediate network relays 183.

Subsequently or in parallel to having transmitting the first message 184a in step S3d, the hardware processor 147 of the user terminal 140 may optionally, but preferably, also execute instructions which are configured to retrieve user data 170, such as e.g. including a tracking cookie 172 and/or a geographical location 149, from an external input source (not shown). The external input may be obtained from a user credential, a web tracking service, a Global Positioning System (GPS) or the like. Steps S5a-c are shown inside a dashed box indicating that retrieving and providing user data 170 may be omitted. In optional step S5a, such user data 170 is retrieved by the hardware processor 147 of the user terminal 140 from an external input source (not shown). In optional step S5a, subsequent to step S5a, a third message 184c representing the user data 170 is generated so that information in the user data 170 can be provided to the server 180. In optional step S5c, subsequent to step S5b, the third message 184c is transmitted to be received at the server 180 via the communications network 185.

In anticipation of receiving a second message 184b from the server 180 in reply to the first message 184a (optionally the third message 184c), the hardware processor 147 of the mobile user terminal 140 then enters an idle state, as illustrated by step S8. In step S9a, a second message 184b representing a selection of window covering devices 210 is received from the server 180 via the communications network 185, such as by the second message 184b being relayed back to the mobile user terminal 140 in reply to the first message 184a through the intermediate network relays 183. In step S9b, a selection of window covering devices 210 is retrieved by hardware processor 147 of the mobile user terminal 140 executing instructions to read and processor information in the second message 184b. In step S9c, subsequent to step S9b, a visual representation 122 of the selection of window covering devices 210 is generated, e.g. by rendering HTML data of a web page result in an internet browser. In step S9d, subsequent to step S9c, the visual representation 122 of the selection of window covering devices 210 is then presented at the display 144 of the mobile user terminal 140 for the user 148 to interact with, such as via an ordering interface 146. Finally, the user 148 may choose to purchase one or more selected window covering devices 212 in the selection of window covering devices 210 presented by the visual representation 122. In step S11, a purchase request by the user 148 is facilitated by to the server 180 via the ordering interface 146 using a suitable purchasing mechanism.

Figure 12 is an illustration of processing steps of a method 300M of selecting window accessories 110,110a,110b for windows 100 for a building 242 to be performed at a hardware processor 187 of a server 180 in a remote ordering system 200 according to one or more embodiments of the present disclosure. These method steps are shown from the point of a manufacturer 244 of window covering devices 110 provisioning a server 180 to provide a remote ordering service 240, such as e.g. discussed in relation to Figs. 7-10 above. It is understood that other processing steps may be carried out by one or more mobile user terminals 140 remote from but communicatively connected to the server 180 via a system 200, as e.g. also discussed in relation to Fig. 11 above. It is furthermore understood that such a server 180 may be adapted to serve multiple clients e.g. by the hardware processor 187 of the server 180 executing instructions in parallel via multi-threading, task switching or the like.

In an initial step S0 from the point of view of a system operator at the server 180, and in anticipation of receiving a first message 184a from the one or more mobile user terminal 140 (optionally a third message 184c), such as e.g. discussed for step S3d (optionally step S5c) in relation to Fig. 11, the hardware processor 187 of the server 180 enters an idle state, as illustrated by step S0. During or prior to this step S0, the processor 187 of the server 180 may be configured, e.g. by the manufacturer 244 or a system operator working for the manufacturer 244, to load instructions which, when executed by said hardware processor 187, are configured to perform functions such as preparing the server 180 to provide a remote ordering service 240, e.g. by loading instructions for a web service manager 181, as discussed in relation to Fig. 9 above. It is understood that the hardware processor 187 may for example be connected to a computer-readable memory, and may have loaded relevant data into said memory, such as e.g. from the computer-readable storage medium 188, prior to step S0. It is for example contemplated that data relating to the database 220 or the look-up table 154 may have been cache or otherwise pre-processed for providing fast access etc. This may provide that the server 180 can process incoming messages 184, 184a, 184c at a high rate, such as by processing a plurality of messages 184 per second, which allows the remote ordering service 240 to service many users 148 simultaneously.

In step S4a, a first message 184a representing identification data 150 read from a machine-readable identifier 132 is received from a mobile user terminal 140 via the communications network 185, such as by the first message 184b being relayed to the web address 182 of the server 180 through intermediate network relays 183 based on the destination data 160 also read from said machine-readable identifier 132. In step S4b, subsequent to step S4a, the identification data 150 is retrieved from the first message 184a, e.g. by the hardware processor 187 executing appropriate instructions to read and process information in said first message 184a. In step 4c, subsequent to step 4b, the hardware processor 187 identifies at least one matching digital record 224 among the plurality of digital records 222a,222b in the database 220 based on the identification data 150, such as e.g. discussed in relation to Fig. 10 above.

Subsequently or in parallel to having received the first message 184a representing identification data 150 in step S4a, the hardware processor 187 of the server 180 may optionally, but preferably, also execute instructions which are configured to receive a third message 184c representing user data 170, such as e.g. discussed in relation to Fig. 11 above, in addition to receiving a first message 184a from that mobile user terminal 140. The steps S6a-c may be optional in respect of step S5a-c in Fig. 11, but corresponding transmitting and receiving steps of a third message 184c is preferable.

In optional step S6a, a third message 184c is received from the mobile user terminal 140 via the communications network 185, such as by the third message 184c being relayed to the server 180 based on the destination data 160, such as e.g. through intermediate network relays 183 similarly to the first message 184a. In optional step S6b, subsequent to step S6a, user data 170 is retrieved from the third message 184c e.g. by the hardware processor 187 of the server 180 similarly executing appropriate instructions to read and process information in said third message 183c. In optional step S6c, subsequent to step S6b, the previous result of step S4c identifying at least one matching digital record 224 among the plurality of digital records 222,222a,222b based on the identification data 150 is improved based on the user data 170, such as e.g. discussed in relation to Fig. 10 above. It is understood that steps S4c and S6c may be performed simultaneously, or as one unified step, wherein said unified step then identifies at least one matching digital record 224 among the plurality of digital records 222,222a,222b based on the identification data 150 and the user data 170.

In step S7a, subsequent to step S4c (optional S6c), a selection of window covering devices 110,110a,110b is performed by the hardware processor 187 of the server 180 based on the at least one matching digital record, and optionally based on further selection criteria, such as e.g. discussed in relation to Fig. 10. As a result of step S7b, the process of selecting window covering devices 110,110a,110b which can fit the at least one window 100 may produces a set of selected window covering devices 212. A non-empty set of such selected window covering devices 212, preferably including at least two different types of selected window covering devices 212, is a selection of window covering devices 210. In is understood that optional step S6c may add, edit or remove one or more selected window covering devices 212 from the selection of window covering devices 210 based on the user data 170. In step S7b, subsequent to step S7a, the hardware processor 187 of the server 180 generates a second message 184b representing the selection of window covering devices 210 in reply to the first message 184a (and optionally the third message 184c). In step S7c, subsequent to step S7b, the second message 184b representing a selection of window covering devices 210 corresponding to the at least one matching digital record 224 from the database 220 is transmitted to be received at the mobile user terminal 140 via the communications network 185, such as by the second message 184a being relayed back to the mobile user terminal 140 in reply to the first message 184a through the intermediate network relays 183. The remote ordering service 240 may continue to serve other mobile user terminals 140 while the user 148 at the present mobile user terminal 140 proceeds to interact with an ordering interface 146 based on the just transmitted second message 184b representing one personalized selection 210.

In anticipation of receiving a purchase request from one of the served mobile user terminals 140 in reply to the respective second message 184a, the hardware processor 187 of the server 180 then enters an idle state, as illustrated by step S10. In idle, an incoming messages 184, 184a, 184c may cause the appropriate processing, e.g. steps S4a, S6a, to be carried out for the respective mobile user terminal 140 also, and then cause the hardware processor 187 of the server 180 to return to idle via step S10. In a final step S12, subsequent to step S10, a purchase request made by the user 148 at a served mobile user terminal 140 is facilitated to and processed by the server 180 via the ordering interface 146 using a suitable purchasing mechanism.

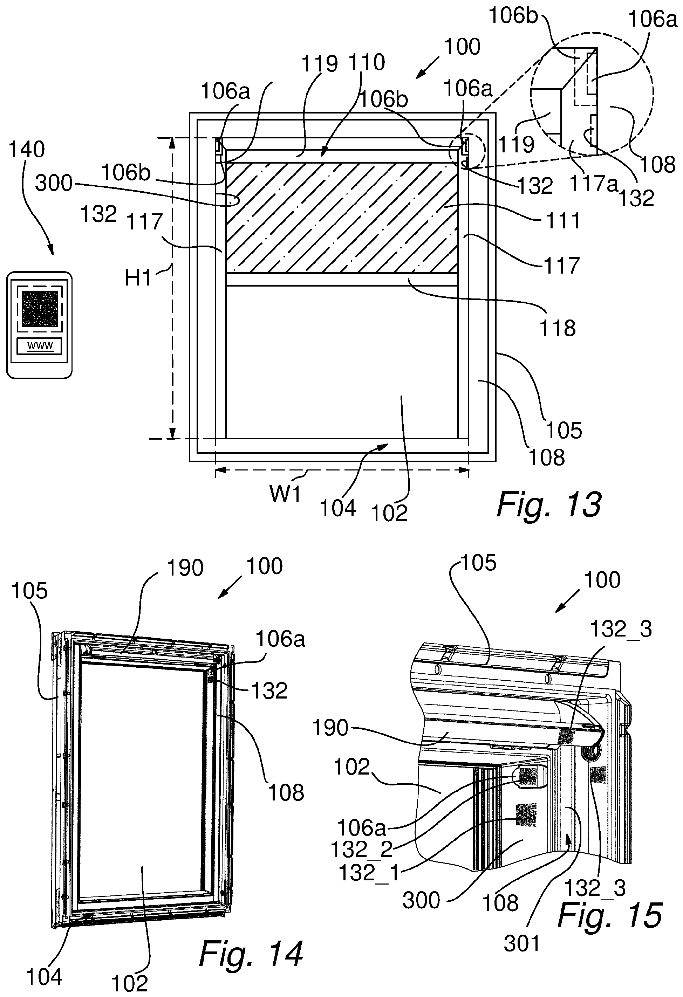

Figure 13 illustrates schematically a window 100 according to embodiments of the present disclosure, with a window covering device 110 installed. The window covering device may here be an interior blind such as a roller blind or pleated blind or venetian blind i.e. covering device types.

The window 100 comprises a frame comprising the fixation frame 105 connected to a sash 108 by means of a hinge system (not illustrated in fig. 13). The frame moreover comprises first fastening mechanisms 106a, in this case two first fastening mechanisms, as e.g. previously disclosed, which engage with a second fastening mechanism 106b of a window covering device. Additionally, an identification item, such as a label, comprises a machine-readable identifier 132. The machine-readable identifier 132 may comprise identification data 150 of the window 100, of at least one window covering device 110 and/or of the first and/or second fastening mechanism. The identification data enables identification of at least one window covering device 110 of a type which is suitable for being installed at the window by means of the first fastening mechanisms 106a and comprises one or more of said second fastening mechanism 106b. The machine-readable identifier 132 is placed visible at a part of the frame 104 when the sash is closed, at least when the covering device 110 is not installed at the window.

It is generally understood that the machine readable identifier 132 may comprise the information as previously described in accordance with one or more embodiments described above with respect to one or more of the previous figures. However, the machine readable identifier 132 illustrated may be configured to be permanently maintained at the frame, such as by means of one or more of printing, an adhesive and/or one or more mechanical fasteners, such as by being a permanent label affixed to the frame. The machine readable identifier may thus be a permanent machine-readable identifier 132 in the sense that it is configured/adapted to be maintained visible at a part of the frame 104 when the sash is closed. The machine-readable identifier 132 may hence be scanned and read automatically or manually as a result of user interaction via a user interface at the mobile user terminal 140.

The machine readable identifier 132 may be configured as a permanent label designed for "one-time application". It may be provided by a permanent printing solution where printing of the machine readable identifier is provided directly on the frame surface, or by use of a strong adhesive that creates a strong, or permanent, bond between a label material comprising the machine readable identifier, and the frame surface. The label material may in embodiments of the present disclosure comprise a foil, plastic sheet, a polymer plate or metal plate and/or the like. Mechanically fasteners such as nails, screws or pop rivets may additionally or alternatively be used for securing the identification item to the frame.

In some embodiments, the identification item may comprise the machine readable identifier being printed directly on the frame surface. In case an adhesives is used, the degree of "permanence" may be determined by a combination of the adhesive, surface material to which it is attached, and the like. An adhesive used for the permanent label may provide a secure bond to the surface material while accommodating the environmental conditions for the window, such as resistance to temperature changes, rather high temperatures, such as above 70°C, moisture, chemicals during window cleaning by means of liquid and possible detergents over the lifetime of the window and/or the like.

A permanent label may be of a different configuration than a removable label solution (e.g. as described with respect to the above mentioned removable representation item and/or removable identification item described in relation to one or more of the previous figures) that may instead use e.g. specialized adhesives that may provide a relatively secure bond to a surface material of the frame, yet allowing the label to be easily removed without leaving adhesive residue, damaging the surface, possibly also without tearing a label material.

The permanent label may in one or more embodiments of the present disclosure be configured to be resistant to sunlight and/or cleaning liquids such as water comprising a certain amount of detergent (e.g. below 5% detergent by weight) such as soap based detergent and/or alcohol. Hence, at least 25 cleanings, such as at least 100 cleanings of the surface of the pane arranged at the same side of the window as the label, and the frame part holding the identification item, may not influent on the readability of the machine readable identifier and/or a label material such as a sheet of material on which the identifier is located, or the label material's attachment to the frame. Hence, the machine readable identifier may be configured to be maintained and machine readable during at least 60%, such as at least 80% of the lifetime of the window.

The machine-readable identifier 132 is may as previously described comprise a QR code, barcode, a radio-frequency identification (RFID) tag or a near-field communication (NFC) tag. This can be scanned by a mobile user terminal 140 as previously described that may e.g. record or receive a digital image of the QR code via a digital camera, such as typically provided in a smartphone, tablet or the like. In some aspects, it may be preferred that the machine-readable identifier 132 is may comprise a QR code, barcode or the like that may be read by means of a camera on a mobile, hand held user terminal 140.

In fig. 13, it is understood that the covering device, in this case in the form as a blind such as a roller blind, may have been ordered/purchased by means of reading the identification reader 132 as e.g. previously explained, such as by reading the permanent, visible machine readable identifier, (by a hand held user device/terminal 140) and installed at the window by means of the fastening mechanisms 106a and 106b. The installed covering device comprises a covering portion 111, such as a fabric, polymer sheet or slats of a venetian blind. Moreover, the covering device may also as illustrated comprise one or more guiding rails 117 for guiding the covering portion 111 along the length H1 of the window 100. The covering device additionally comprises a housing 119 for e.g. enclosing the unexpended part of the covering portion 111 and/or the covering device may comprise a grip profile 118 for grabbing and moving the covering portion 111 by hand and/or for providing improved control of the covering portion. The covering device may also comprise a drive unit (not illustrated) such as a motor for driving the covering portion between a covering position and a position where the covering portion covers as little of the pane as possible. The drive unit may be placed in the housing. It is understood that the one or more guiding rails 117 are to be considered as a part of the window covering device, if present, and are normally supplied together with the housing 119 and remaining parts of the covering device when purchasing it.

The first fastening mechanism 106a is placed at a surface of the frame, in this case a frame surface 300 facing the frame opening provided by the sash, and through which a user can see through the window pane. In the present embodiment, the machine readable identifier (132) is placed on the same surface 300 of the frame.

The identification item may also comprise a visual indication, such as an arrow, text or the like, that indicate that the functionality of the machine readable identifier is related to the first fastening mechanism and use thereof.

In other embodiments of the present disclosure, the machine readable identifier 132 may be placed at the same frame part/component of the frame, but not necessarily at the same surface as the first fastening mechanism. For example, in aspects of the present disclosure, the machine readable identifier may be placed at a surface neighbouring to a surface 300 at which the first fastening mechanism is placed (see e.g. surface 301 in fig. 15). This may however still be within 0.1 cm to 20 cm from the first fastening mechanism.

The window pane 102 comprises a visible part that has a width W1. Accordingly, the window covering device 110 is of a predefined width that is configured specifically to be installed at the window having a said visible part with said width W1. This may especially be relevant in for example roof window applications, as such windows are often made with predefined sizes, and with first connection mechanisms of a preselected type. Roof windows also are often placed in a position different to vertical. Hence, the designing of a blind 110, e.g. a motorized, blind may be rather complex and call for individual adaption which increases the risk of ordering wrong window coverings. By providing the visible identification item at the window, such as a roof window 100, so that the user can see it even if the sash is closed, e.g. from the interior of the building, the user may have an increased chance of ordering the correct blind as the visible identifier may more easily prompt the user to scan the identifier such as a QR code, and hence be presented to the correct information that may be transmitted to a server by means of a user terminal and/or may simply be presented to the user by means of the hand held user terminal 140.

The window covering device comprises one or more components of the covering device 110 such as the guiding rails 117, the second fixation/fastening mechanism 106, the housing 119, and/or the covering part 111 may in embodiments of the present disclosure be configured to at least partly, such a substantially fully, hide at least a part of the identification item such as the machine readable identifier. This hiding may in some embodiments of the present disclosure be provided so that the machine readable identifier 132, is rendered inoperable when the covering device is installed at the window. In other embodiments, the hiding provided by the covering device may result in that the user may need to get closer to the window or at least make a larger effort to get the hand held user device 140 to a proper location to read the machine readable identifier 132, compared to a situation where the covering device 110 is not installed at the window.

In the embodiment of fig. 8, a combination of the housing 119 and the rail 117 may visually hide the machine readable identifier 132. Hence, a user may see a glimpse of the bottom part of the machine readable identifier 132 if moving to a location to see a part of the frame surface 300 behind the rail 117, but the machine readable identifier is hidden by a part of the rail 117 and the end of the housing so that it is significantly more hidden than before the installation of the covering device. In some further aspects, in case the machine readable identifier is placed further apart from the fastening mechanism 106a (not illustrated in fig. 13), the rail 117 may be the one covering identifier 132. The rail may comprise an elongated rail part that extends at least partly or fully in over the surface 300 and hence hides a part of the identifier 132. In Other embodiments, the rail 117 may merely comprise the rail part 117a that may extend in over a part of the otherwise exposed part of the pane to provide a space between the rail and the pane for guiding the covering part 111. Also this rail part 117 may provide said hiding of the machine readable identifier 132.

Generally, it is understood that the hiding by means of the covering device 110 may provide that it may be harder to visually see, with human eye, the machine readable identifier 132 from the inside of the building, compared to if the window covering device is not present. However, if the covering device is removed again, the machine readable identifier may be more visible/accessible (i.e. less hidden) again, and hence allow for use again in case of e.g. a replacement of the covering device. The visibility of the machine readable identifier may be reduced at least from the inside of the building when the covering device is installed.

The covering device in fig. 13 is installed at the interior of the window facing the interior of the building.

The identification item may in some embodiments of the present disclosure (not illustrated in fig. 13) comprise visible text or other markings, such as arrows or other symbols, indicating the position and/or presence of the machine readable identifier to a user, and/or the purpose of the machine readable identifier. For example, an arrow may be placed on the window frame at a location near and/or between the machine readable identifier 132 and the first fastening mechanism 106a, thereby indicating that the machine readable identifier 132 related to the intended function of the first fastening mechanism 106a
Installation of the window covering device may hide the visible text and/or the marking identifying the machine readable identifier.

The permanent, visible machine-readable identifier may as e.g. previously described, comprise a Uniform Resource Locator (URL) representation as previously explained, which is directed to a web address, such as a web address of an online store. For example, the Uniform Resource Locator URL representation 186 may comprise the identification data 150, such as by the identification data 150 being appended to the web address. For example the machine-readable identifier 132 may comprise a Quick Response (QR) code, wherein the Quick Response (QR) code comprises the identification data 150. Generally, the Machine readable identifier may have substantially the same information embedded therein as the machine readable identifier previously described with regard to one or more of the previous figures.

Due to that the size of the covering device, matches the window, and since the device comprises the second fastening mechanism(s) 106b matches the first fastening mechanism(s), this may help to provide a more easy installation of the covering device. Hence, the user first uses a hand held user terminal such as a smartphone to scan the visible identifier. This may provide sufficient information for the user to be able to obtain the correct window by reading the obtained and decoded information on a screen of the user device. In further embodiments, the user interface may prompt the user to visit a web address, where one or more covering devices of the correct size and having the correct second fastening mechanisms 106b are automatically presented to the user through the screen of the user terminal 140, and may preferably also be accessible for purchasing at the web page in case the web page is an online store.

After the user has purchased and received the covering device 110, the method of installing the window covering device at the window 100 comprising the scanned (permanent and/or removable) machine readable identifier 132 may be provided. This installation method may comprise, in a first step, providing the received/purchased covering device. This will, due to the information of the machine readable identifier being used during the purchasing of the covering device, be of a type which is configured to be installed at the window by means of the first fastening mechanism 106a and comprising a second fastening mechanism 106b that is configured to engage with the first fastening mechanism(s) of the window. Then the covering device is installed at the window by engaging the first fastening mechanism with the second fastening mechanism 106a, and this fixates the covering device at the window. Screws may in certain embodiment subsequently be provided into the frame in order to fixate the covering device more firmly at e.g. the sash. Moreover, in further embodiments, the installation may also comprise installing the guiding rails along the frame, such as along the sash, of the frame. This may be done by means of one or more of a clips system, one or more screws and/or an adhesive. Also, some flexible guiding mediums (not illustrated) such as strings, wires, chains or the like may be extended from the housing and towards the bottom of the sash, e.g. behind the rails 117 between rail and pane, in order to be able to provide a more easy guiding of the covering part 111 of the covering device, and/or enable motorized operation of the covering device. After installation, one or more components 117, 106b, 119, 111 of the window covering device may at least partly, such a substantially fully, hide at least a part of the identification item as previously explained.

Fig. 14 illustrates schematically and in perspective a roof window according to embodiments of the present disclosure, before a covering device is installed. The roof window hence comprises the machine readable identifier 132 that is visible on the frame when the sash is closed, and is here located at the sash near the machine readable identifier 132. Additionally, the roof window frame 104 comprises the first fastening mechanism 106a such as a bracket, only one is shown in fig. 14 due to the view, but it is understood that a further bracket 106a may be placed at the opposing side of the sash. The roof window may also in some embodiments of the present disclosure comprise a handle, 190, in the present case a handle extending along the width of the sash at the upper part of the sash.

The permanent machine readable identifier 132 may be placed at the top part of the window, such as the top part of the sash as illustrated in fig. 8 and 9 (see also fig. 10) as this is near the location of one of the brackets 106a.

Fig. 15 illustrates schematically and in perspective a corner part of a roof window, such as a roof window as illustrated in fig. 14. Here, different locations of a permanent machine readable identifier 132 is illustrated in accordance with the present disclosure.

**In** a first embodiment, the machine readable 132_1 may be placed at the same frame surface 300 of the sash as the first fastening mechanism 106a is placed at/on. This surface faces the frame opening provided by the sash and through which a user will look to see through the pane 102. A machine readable identifier 132 (no illustrated) may additionally or alternatively be placed at another visible surface of the sash, such as the surface 301 of the sash.

In a second embodiment, the machine readable identifier 132_2 is placed on the first fastening mechanism 106a, in this case on a bracket such as a bracket with which the second fastening mechanism 106b of the covering device is configured to slidably engage. Hence, installing the covering device in the window will automatically, and substantially fully, hide the machine readable identifier 132_2

In a third embodiment, the machine readable identifier 132_3 is placed at a surface of the fixation frame.

In a fourth embodiment, the machine readable identifier 132_4 is placed at a surface of the handle 190, such as a surface at least partly facing away from the frame and pane.

It is understood that one or more of the machine readable identifiers 132_1, 132_2, 133_3, 134_4 may be omitted. For example, only one or both of the machine readable identifiers 132_1, 132_2, may be provided.

Common to all of the examples of the machine readable identifiers 132_1, 132_2, 133_3, 134_4 is that they are permanently placed on the frame, and are visible to the human eye, also when the sash is in a closed position, from the inside of the building in which the window is installed.

In one or more embodiments of the present disclosure, the machine readable identifier may be placed in close proximity of the fastening mechanism 106a, for example within 0.1 cm to 20 cm, such as within 0.1 cm to or 15 cm from the first fastening mechanism when the sash is in closed position.

In fig. 15, the identification item comprises at least one machine-readable identifier 132 in the form of a QR code, but it may also in other embodiments comprise a barcode or the like.

As can be seen from especially figs 9 and 10, the window 100 may be provided with the first fastening mechanisms 106a pre-installed and hence ready to receive the covering device 110. The first fastening mechanisms 106a comprises two brackets provided at each opposite frame 104 side having an interior width W1. The brackets 106a are situated at the top of the frame 104. The two brackets may face toward each other. The first fastening mechanisms 106a are configured to at least hold the covering device 110 housing 119, also known as the top rail or cassette. The first fastening mechanisms 106a are preferably minor flat brick and/or wedge shaped elements, which may be mounted by the window manufacturer, without their presence disturbing the overall appearance of the window in case no screening device is mounted.

Generally multiple first fastening mechanisms 106a also known as mounting brackets may be employed such as disclosed by the applicant in one or more of EP1003953, EP1151176, EP1500775, EP2002079, EP3205808 and EP3354839. These comprises improvements that ensure better and more reliable operation, blind removal, better support for different covering devices (venetian blinds, roman blinds, roller blinds etc.), support for electric blinds and ease of manufacture and assembly. More enhanced fastening mechanisms 106a,106b may however be provided with future windows and screening devices.

The first fastening mechanisms 106a may comprise a bracket of a plug kind while the second fastening mechanism 106b may comprise a counterpart bracket of a socket kind. The first fastening mechanisms 106a may as illustrated in e.g. fig 9 and 10 protrude from the frame 104 surface.

The second fastening mechanism 106b may comprise a notch recess (not illustrated) in the covering device 110.

The first fastening mechanisms 106a may have/provide a mounting direction. The mounting direction may be perpendicular to the window pane 102 or parallel with the window pane 102. The covering device 110 is passed/slided along the first fastening mechanisms 106a in a sliding fashion and engages the fastening mechanisms 106a. An adapter piece may optionally be provided to connect to the first fastening mechanisms 106a.

The second fastening mechanism 106b is situated on the covering device 110 and slides onto the first fastening mechanisms 106a and preferably has a snap engagement. The covering device 110 has a resilient element such as a spring-loaded pin or an elastic finger (not illustrated) which engage the first fastening mechanisms 106a in the mounted position in order to snap hold the covering device. These resilient elements are provided at the cassette extremes/ends where the second fastening mechanism 106b is situated.

One advantage of the fastening mechanisms 106a,106b may be that the screening device 110 is held in position by these while the user has both hands free to perform the assembly of side rails 117 and optional cords/wires and perform the remaining installation of the screening device in an inclined roof window under the influence of gravity.

It is generally understood that in some embodiments of the present disclosure,

The window may upon delivery, beyond one or more machine readable identifiers configured to be permanent/maintained on the window, comprise a removable representation item 120 comprising a visual representation 122 of the window covering device 110 to be installed, as e.g. previously disclosed in accordance with one or more embodiments of one or more of figs. 1-12 and/or the description thereto. Additionally or alternatively, the window 100, such as a woof window, may upon delivery comprise a removable identification item 120,130 (see e.g. figs. 1-3), comprising at least one further machine-readable identifier 132 as previously described. After removing these removable items, the machine readable identifier 132 described in relation to one or more of figs. 13-15 may however be maintained at the frame for later use by a user.

However it is understood that in some embodiments of the present disclosure, the removable representation item 120 and/or the removable identification item(s) may have been omitted, also upon delivery of the window, so that the window 100 alone comprises one or more machine readable identifiers in the form of one or more machine readable identifier configured to be permanently maintained on the window.

### References

- 100: Window
- 101a-b: Set of windows
- 102: Window pane
- 103: Visible part
- 104: Frame
- 105: Fixation frame
- 106a-b: Fastening mechanism
- 107: Hinge system
- 108: Sash
- 109: Latch mechanism
- 110,110a-b: Window covering device
- 111: Covering portion
- 112: Removable sheet
- 114: Clear part
- 116: Display part
- 117: Guide rail
- 118: Grip profile
- 119: Housing
- 120: Removable representation item
- 122: Visual representation
- 130: Removable identification item
- 131: Identification item
- 132: Machine-readable identifier
- 140: Mobile user terminal
- 142: Automatic identification reader
- 143: Digital camera
- 144: Display
- 145: Internet browser
- 146: Ordering interface
- 147: Hardware processor
- 148: User
- 149: Geographical location
- 150: Identification data
- 152: Predetermined code
- 154: Look-up table
- 160: Destination data
- 170: User data
- 172: Tracking cookie
- 180: Server
- 181: Web service manager
- 182: Web address
- 183: Network interface device
- 184,184a-c: Message
- 185: Communications network
- 186: URL representation
- 187: Hardware processor
- 188: Storage medium
- 190: Handle
- 200: System
- 210: Selection of window covering devices
- 212: Selected window covering device
- 220: Database
- 222,222a-b: Digital record
- 224: Matching digital record
- 226: Digital image
- 240: Remote ordering service
- 242: Building
- 244: Manufacturer
- 300, 301: Frame surface
- 300M: Method
- H1,H2: Height
- L1: Length
- LD: Longitudinal direction
- S0-12: Method step
- W1,W2: Width
- CW: Covering width

## Claims

1. A method of identifying suitable covering devices for installation at a window, such as a roof window, wherein the window (100) comprises:
- at least one first fastening mechanism (106a) configured to engage with a second fastening mechanism (106b) of a window covering device (110), and
- an identification item comprising at least one machine-readable identifier (132), wherein the machine-readable identifier (132) comprises identification data (150) of the window (100), such as relating to the first fastening mechanism (106a), and/or identification data (150) of at least one window covering device (110) having a second fastening mechanism (106b) configured to engage with the first fastening mechanism (106), wherein the machine-readable identifier (132) further comprises destination data (160) directed towards an online store,
wherein the method comprises the steps of:
- providing a mobile user terminal (140) comprising an automatic identification reader (142), at the location of the window (100),
- operating the automatic identification reader (142) to retrieve the destination data (160) and the identification data (15) based on the machine-readable identifier (132),
- providing a Uniform Resource Locator (URL) representation of a web address (182) of the online store based on the destination data (160) and the identification data (150) to a web application, such as an internet browser, installed at the mobile user terminal (140), thereby providing the read identification data (150) to a server (180) at the web address (182),
- receiving from the server (180), at the mobile user terminal (140), one or more web page results (184b) representing a selection of one or more window covering devices (210), wherein the selection of one or more window covering devices (210) is based on the provided identification data (150), and wherein the selection of one or more window covering devices (210) is/are configured for installation at the window (100) by said selection of window covering devices (210) having a second fastening mechanism configured to engage the at least one first fastening mechanism (106a),
- presenting, at a display of the mobile user terminal, the selection of one or more window covering devices (210),
- wherein a user of the mobile user terminal operates a user interface of the mobile user terminal (14) in order to purchase at least one window covering device of said presented selection of one or more window covering devices (210) though said online store,
- installing the purchased at least one window covering devices (110) at said window comprising said identification item by means of the first fastening mechanism (106a) of the window and the second fastening mechanism (106b) of the purchased window covering device.

2. A method according to claim 1, wherein said window is a roof window, and wherein said step of installing the window covering devices (110) comprises attaching one or more guiding rails (117) of the purchased covering device (110) for guiding a covering portion (111) of the covering device (110) along the length of the window (100).

3. A method according to any of the preceding claims, wherein said presented one or more web page results is/are presented by means of an internet browser of the mobile user terminal.

4. A method according to any of the preceding claims, wherein the destination data (160) comprises an Uniform Resource Locator (URL) representation (186) which is directed to said web address (182), and wherein said Uniform Resource Locator (URL) representation that is provided to the web application is based on said Uniform Resource Locator (URL) representation (186) of the destination data.

5. A method according to claim 4, wherein the Uniform Resource Locator (URL) representation (186) provided to the web application comprises the identification data (150), such as by the identification data (150) being appended to the web address (182).

6. A method according to any of the presented claims, wherein said presenting of one or more web page results of window covering devices (110) comprises presenting a selection of window covering devices (210) among a plurality of window covering devices (110), wherein the selection of window covering devices (110) represents a selected, filtered sub-group of the plurality of window covering devices (110), and wherein the filtered sub-group of window covering devices (110) is/are configured to fit and be installed at the window (100) by means of the first and second fastening mechanisms (106a, 106b).

7. A method according to any of the preceding claims, wherein the method further comprises the steps of providing user data (170) of the user (148) and/or the mobile user terminal (140) to the server.

8. A method according to claim 7, wherein the presented one or more web page results of window covering devices (110) is based on the identification data (150) and the user data (170).

9. A method according to claim 7 or 8, wherein the user data (170) includes a geographical location (149) of the user (148) and/or the mobile user terminal (140), and preferably wherein at least one, such as each, window covering device (110) in the selection of presented one or more window covering devices (210) is available for sale at and/or delivery to said geographical location (149).

10. A method according to any of the preceding claims, wherein the window comprises a window pane (102) comprising a visible pane part (103) having a predetermined width (W1), wherein the presented selection of one or more window covering devices (110) is/are configured to cover a predefined width matching the predefined width (W1) of the visible pane part (103) and/or configured to be installed at the window having a said visible pane part (103) with said width (W1).

11. A method according to any of the preceding claims, wherein the machine readable identifier (132) is placed visible at a part (104, 105, 108) of a frame of the window when the sash is closed and/or wherein the machine readable identifier (132) is configured to be permanently maintained at the window.

12. A method according to any of the preceding claims, wherein one or more of the selection of one or more window covering devices (210) is/are window covering devices (110) represented by a removable visual representation (122) of a removable representation item attached to said window (100), such as wherein the removable representation item (120) is or comprises is a removable sheet (112), such as a foil or plastic sheet, which is removably attached to a surface of the window pane (102).

13. A method according to any of the preceding claims, wherein the window comprises a removable identification item (120,130), comprising the machine-readable identifier (132).

14. A method according to any of the preceding claims, wherein the machine-readable identifier (132) comprises or is a barcode or a Quick Response (QR) code.

15. A method according to any of the preceding claims, wherein the identification data (150) comprises one or more of:
- product type information,
- product size information,
- product manufacturing information,
- product accessory category information and/or
- product material information
related to the window (100) and/or the window covering device (110).

## Patentansprüche

1. Verfahren zum Identifizieren geeigneter Abdeckvorrichtungen für die Installation an einem Fenster, wie beispielsweise einem Dachfenster, wobei das Fenster (100) Folgendes umfasst:
mindestens einen ersten Befestigungsmechanismus (106a), der dazu konfiguriert ist, mit einem zweiten Befestigungsmechanismus (106b) einer Fensterabdeckvorrichtung (110) einzugreifen, und
ein Identifizierungselement, umfassend mindestens einen maschinenlesbaren Bezeichner (132), wobei der maschinenlesbare Bezeichner (132) Identifizierungsdaten (150) des Fensters (100) umfasst, wie beispielsweise in Bezug auf den ersten Befestigungsmechanismus (106a), und/oder Identifizierungsdaten (150) mindestens einer Fensterabdeckvorrichtung (110), die einen zweiten Befestigungsmechanismus (106b) aufweist, der dazu konfiguriert ist, mit dem ersten Befestigungsmechanismus (106) einzugreifen, wobei der maschinenlesbare Bezeichner (132) ferner Zieldaten (160) umfasst, die an einen Online-Shop geleitet werden,
wobei das Verfahren die folgenden Schritte umfasst:
Bereitstellen eines mobilen Benutzerendgeräts (140), umfassend einen automatischen Identifizierungsleser (142) an dem Standort des Fensters (100),
Betreiben des automatischen Identifizierungslesers (142), um die Zieldaten (160) und die Identifizierungsdaten (15) basierend auf dem maschinenlesbaren Bezeichner (132) abzurufen,
Bereitstellen einer Internetadressen- (Uniform Resource Locator, URL-)Darstellung einer Webadresse (182) des Online-Shops basierend auf den Zieldaten (160) und den Identifizierungsdaten (150) an eine Webanwendung, wie beispielsweise einen Internetbrowser, installiert auf dem mobilen Benutzerendgerät (140), wodurch die ausgelesenen Identifizierungsdaten (150) an einen Server (180) an der Webadresse (182) bereitgestellt werden,
Empfangen von einem oder mehreren Webseitenergebnissen (184b), die eine Auswahl einer oder mehrerer Fensterabdeckvorrichtungen (210) darstellen, von dem Server (180) an dem mobilen Benutzerendgerät (140), wobei die Auswahl einer oder mehrerer Fensterabdeckvorrichtungen (210) auf den bereitgestellten Identifizierungsdaten (150) basiert und wobei die Auswahl einer oder mehrerer Fensterabdeckvorrichtungen (210) zur Installation an dem Fenster (100) durch die Auswahl der Fensterabdeckvorrichtungen (210) konfiguriert ist, die einen zweiten Befestigungsmechanismus aufweisen, der dazu konfiguriert ist, in den mindestens einen ersten Befestigungsmechanismus (106a) einzugreifen,
Präsentieren der Auswahl einer oder mehrerer Fensterabdeckvorrichtungen (210) an einer Anzeige des mobilen Benutzerendgeräts,
wobei ein Benutzer des mobilen Benutzerendgeräts eine Benutzerschnittstelle des mobilen Benutzerendgeräts (14) betreibt, um mindestens eine Fensterabdeckvorrichtung aus der präsentierten Auswahl einer oder mehrerer Fensterabdeckvorrichtungen (210) über den Online-Shop zu kaufen, Installieren der mindestens einen gekauften Fensterabdeckvorrichtung (110) an dem Fenster, umfassend das Identifizierungselement mittels des ersten Befestigungsmechanismus (106a) des Fensters und des zweiten Befestigungsmechanismus (106b) der gekauften Fensterabdeckvorrichtung.

2. Verfahren nach Anspruch 1, wobei das Fenster ein Dachfenster ist und wobei der Schritt des Installierens der Fensterabdeckvorrichtungen (110) Befestigen einer oder mehrerer Führungsschienen (117) der gekauften Abdeckvorrichtung (110) zum Führen eines Abdeckabschnitts (111) der Abdeckvorrichtung (110) entlang der Länge des Fensters (100) umfasst.

3. Verfahren nach einem der vorhergehenden Ansprüche, wobei die eine oder die mehreren präsentierten Webseitenergebnisse mittels eines Internetbrowsers des mobilen Benutzerendgeräts präsentiert werden.

4. Verfahren nach einem der vorhergehenden Ansprüche, wobei die Zieldaten (160) eine Internetadressen- (URL-)Darstellung (186) umfassen, die auf die Webadresse (182) geleitet ist und wobei die Internetadressen- (URL-)Darstellung, die der Webanwendung bereitgestellt wird, auf der Internetadressen- (URL-)Darstellung (186) der Zieldaten basiert.

5. Verfahren nach Anspruch 4, wobei die der Webanwendung bereitgestellte Internetadressen- (URL-)Darstellung (186) die Identifizierungsdaten (150) umfasst, wie beispielsweise indem die Identifizierungsdaten (150) an die Webadresse (182) angehängt werden.

6. Verfahren nach einem der vorhergehenden Ansprüche, wobei das Präsentieren eines oder mehrerer Webseitenergebnisse von Fensterabdeckvorrichtungen (110) das Präsentieren einer Auswahl von Fensterabdeckvorrichtungen (210) aus einer Vielzahl von Fensterabdeckvorrichtungen (110) umfasst, wobei die Auswahl von Fensterabdeckvorrichtungen (110) eine ausgewählte gefilterte Teilgruppe der Vielzahl von Fensterabdeckvorrichtungen (110) darstellt und wobei die gefilterte Teilgruppe von Fensterabdeckvorrichtungen (110) dazu konfiguriert ist, an dem Fenster (100) mittels des ersten und des zweiten Befestigungsmechanismus (106a, 106b) angebracht und installiert zu werden.

7. Verfahren nach einem der vorhergehenden Ansprüche, wobei das Verfahren ferner die Schritte des Bereitstellens von Benutzerdaten (170) des Benutzers (148) und/oder des mobilen Benutzerendgeräts (140) an den Server umfasst.

8. Verfahren nach Anspruch 7, wobei die eine oder mehreren präsentierten Webseitenergebnisse von Fensterabdeckvorrichtungen (110) auf den Identifizierungsdaten (150) und den Benutzerdaten (170) basieren.

9. Verfahren nach Anspruch 7 oder 8, wobei die Benutzerdaten (170) einen geographischen Standort (149) des Benutzers (148) und/oder des mobilen Benutzerendgeräts (140) beinhalten und vorzugsweise wobei mindestens eine, wie beispielsweise jede, Fensterabdeckvorrichtung (110) bei der Auswahl einer oder mehrerer präsentierter Fensterabdeckvorrichtungen (210) zum Verkauf an und/oder zur Abgabe an den geografischen Standort (149) verfügbar ist.

10. Verfahren nach einem der vorhergehenden Ansprüche, wobei das Fenster eine Fensterscheibe (102) umfasst, die einen sichtbaren Scheibenteil (103) aufweist, der eine vorbestimmte Breite (W1) aufweist, wobei die präsentierte Auswahl einer oder mehrerer Fensterabdeckvorrichtungen (110) dazu konfiguriert ist, eine vordefinierte Breite abzudecken, die auf die vordefinierte Breite (W1) des sichtbaren Scheibenteils (103) abgestimmt ist, und/oder dazu konfiguriert ist, an dem Fenster installiert zu werden, das einen sichtbaren Scheibenteil (103) aufweist, der die Breite (W1) aufweist.

11. Verfahren nach einem der vorhergehenden Ansprüche, wobei der maschinenlesbare Bezeichner (132) an einem Teil (104, 105, 108) eines Rahmens des Fensters sichtbar angeordnet ist, wenn der Flügel geschlossen ist, und/oder wobei der maschinenlesbare Bezeichner (132) dazu konfiguriert ist, dauerhaft an dem Fenster gehalten zu werden.

12. Verfahren nach einem der vorhergehenden Ansprüche, wobei eine oder mehrere der Auswahl einer oder mehrerer Fensterabdeckvorrichtungen (210) Fensterabdeckvorrichtungen (110) sind, die durch eine entfernbare visuelle Darstellung (122) eines entfernbaren Darstellungselements dargestellt sind, der an dem Fenster (100) befestigt ist, wobei das entfernbare Darstellungselement (120) ein entfernbares Blatt (112) ist oder dieses umfasst, wie beispielsweise eine Folie oder ein Kunststoffblatt, die/das entfernbar an einer Fläche der Fensterscheibe (102) befestigt ist.

13. Verfahren nach einem der vorhergehenden Ansprüche, wobei das Fenster ein entfernbares Identifizierungselement (120, 130) umfasst, das den maschinenlesbaren Bezeichner (132) umfasst.

14. Verfahren nach einem der vorhergehenden Ansprüche, wobei der maschinenlesbare Bezeichner (132) einen Strichcode oder einen Schnellantwortcode (Quick Response, QR) umfasst oder ein solcher ist.

15. Verfahren nach einem der vorhergehenden Ansprüche, wobei die Identifizierungsdaten (150) eines oder mehrere von Folgendem umfassen:
Produkttypinformationen,
Produktgrößeninformationen,
Produktherstellungsinformationen,
Produktzubehörinformationen und/oder
Produktmaterialinformationen
in Bezug auf das Fenster (100) und/oder die Fensterabdeckvorrichtung (110).

## Revendications

1. Procédé d'identification de dispositifs de recouvrement appropriés à installer sur une fenêtre, telle qu'une fenêtre de toit, dans lequel la fenêtre (100) comprend :
- au moins un premier mécanisme de fixation (106a) configuré pour entrer en prise avec un second mécanisme de fixation (106b) d'un dispositif de couverture de fenêtre (110), et
- un élément d'identification comprenant au moins un identifiant lisible par machine (132), dans lequel l'identifiant lisible par machine (132) comprend des données d'identification (150) de la fenêtre (100), telles que celles relatives au premier mécanisme de fixation (106a), et/ou des données d'identification (150) d'au moins un dispositif de recouvrement de fenêtre (110) comportant un second mécanisme de fixation (106b) configuré pour entrer en prise avec le premier mécanisme de fixation (106), dans lequel l'identifiant lisible par machine (132) comprend également des données de destination (160) dirigées vers une boutique en ligne,
- dans lequel le procédé comprend les étapes :
- de fourniture d'un terminal utilisateur mobile (140) comprenant un lecteur d'identification automatique (142), à l'emplacement de la fenêtre (100),
- de fonctionnement du lecteur d'identification automatique (142) pour récupérer les données de destination (160) et les données d'identification (15) sur la base de l'identifiant lisible par machine (132),
- de fourniture d'une représentation URL (localisateur uniforme de ressources) d'une adresse Web (182) de la boutique en ligne sur la base des données de destination (160) et des données d'identification (150) à une application Web, telle qu'un navigateur Internet, installée sur le terminal utilisateur mobile (140), fournissant ainsi les données d'identification lues (150) à un serveur (180) à l'adresse Web (182),
- de réception à partir du serveur (180), sur le terminal utilisateur mobile (140), d'un ou de plusieurs résultats de page web (184b) représentant une sélection d'un ou de plusieurs dispositifs de recouvrement de fenêtre (210), dans lequel la sélection d'un ou de plusieurs dispositifs de recouvrement de fenêtre (210) est basée sur les données d'identification fournies (150), et dans lequel la sélection d'un ou de plusieurs dispositifs de recouvrement de fenêtre (210) est/sont configuré(s) pour être installé(s) sur la fenêtre (100) par ladite sélection de dispositifs de recouvrement de fenêtre (210) ayant un second mécanisme de fixation configuré pour entrer en prise avec l'au moins un premier mécanisme de fixation (106a),
- de présentation, sur un écran du terminal utilisateur mobile, de la sélection d'un ou de plusieurs dispositifs de recouvrement de fenêtre (210),
- dans lequel un utilisateur du terminal utilisateur mobile utilise une interface utilisateur du terminal utilisateur mobile (14) afin d'acheter au moins un dispositif de revêtement de fenêtre de ladite sélection présentée d'un ou de plusieurs dispositifs de revêtement de fenêtre (210) par le biais de ladite boutique en ligne,
- d'installation de l'au moins un dispositif de couverture de fenêtre acheté (110) sur ladite fenêtre comprenant ledit élément d'identification au moyen du premier mécanisme de fixation (106a) de la fenêtre et du second mécanisme de fixation (106b) du dispositif de couverture de fenêtre acheté.

2. Procédé selon la revendication 1, dans lequel ladite fenêtre est une fenêtre de toit, et dans lequel ladite étape d'installation des dispositifs de couverture de fenêtre (110) comprend la fixation d'un ou de plusieurs rails de guidage (117) du dispositif de couverture acheté (110) pour guider une partie de couverture (111) du dispositif de couverture (110) le long de la longueur de la fenêtre (100).

3. Procédé selon l'une quelconque des revendications précédentes, dans lequel lesdits un ou plusieurs résultats de page Web présentés sont présentés au moyen d'un navigateur Internet du terminal utilisateur mobile.

4. Procédé selon l'une quelconque des revendications précédentes, dans lequel les données de destination (160) comprennent une représentation URL (localisateur uniforme de ressources) (186) qui est dirigée vers ladite adresse Web (182), et dans lequel ladite représentation URL (localisateur uniforme de ressources) qui est fournie à l'application Web est basée sur ladite représentation URL (localisateur de uniforme de ressources) (186) des données de destination.

5. Procédé selon la revendication 4, dans lequel la représentation URL (localisateur uniforme de ressources) (186) fournie à l'application Web comprend les données d'identification (150), telles que les données d'identification (150) étant ajoutées à l'adresse Web (182).

6. Procédé selon l'une quelconque des revendications présentées, dans lequel ladite présentation d'un ou de plusieurs résultats de page Web de dispositifs de couverture de fenêtre (110) comprend la présentation d'une sélection de dispositifs de couverture de fenêtre (210) parmi une pluralité de dispositifs de couverture de fenêtre (110), dans lequel la sélection de dispositifs de couverture de fenêtre (110) représente un sous-groupe sélectionné et filtré de la pluralité de dispositifs de couverture de fenêtre (110), et dans lequel le sous-groupe filtré de dispositifs de couverture de fenêtre (110) est/sont configuré(s) pour s'adapter et être installé(s) sur la fenêtre (100) au moyen des premier et second mécanismes de fixation (106a, 106b).

7. Procédé selon l'une quelconque des revendications précédentes, dans lequel le procédé comprend également les étapes de fourniture des données utilisateur (170) de l'utilisateur (148) et/ou du terminal utilisateur mobile (140) au serveur.

8. Procédé selon la revendication 7, dans lequel les un ou plusieurs résultats de page Web présentés des dispositifs de recouvrement de fenêtre (110) sont basés sur les données d'identification (150) et les données d'utilisateur (170).

9. Procédé selon la revendication 7 ou 8, dans lequel les données d'utilisateur (170) comportent un emplacement géographique (149) de l'utilisateur (148) et/ou du terminal utilisateur mobile (140), et de préférence dans lequel au moins un, tel que chaque, dispositif de recouvrement de fenêtre (110) dans la sélection d'un ou de plusieurs dispositifs de recouvrement de fenêtre (210) présentés est disponible à la vente et/ou à la livraison audit emplacement géographique (149).

10. Procédé selon l'une quelconque des revendications précédentes, dans lequel la fenêtre comprend une vitre (102) comprenant une partie de vitre visible (103) ayant une largeur prédéterminée (W1), dans lequel la sélection présentée d'un ou de plusieurs dispositifs de recouvrement de fenêtre (110) est/sont configuré(s) pour couvrir une largeur prédéfinie correspondant à la largeur prédéfinie (W1) de la partie de vitre visible (103) et/ou configuré(s) pour être installé(s) sur la fenêtre ayant une dite partie de vitre visible (103) avec ladite largeur (W1).

11. Procédé selon l'une quelconque des revendications précédentes, dans lequel l'identifiant lisible par machine (132) est placé de manière visible sur une partie (104, 105, 108) d'un cadre de la fenêtre lorsque le châssis est fermé et/ou dans lequel l'identifiant lisible par machine (132) est configuré pour être maintenu en permanence sur la fenêtre.

12. Procédé selon l'une quelconque des revendications précédentes, dans lequel un ou plusieurs de la sélection d'un ou de plusieurs dispositifs de recouvrement de fenêtre (210) sont des dispositifs de recouvrement de fenêtre (110) représentés par une représentation visuelle amovible (122) d'un élément de représentation amovible fixé à ladite fenêtre (100), tel que dans lequel l'élément de représentation amovible (120) est ou comprend une feuille amovible (112), telle qu'une feuille d'aluminium ou une feuille de plastique, qui est fixée de manière amovible à une surface de la vitre (102).

13. Procédé selon l'une quelconque des revendications précédentes, dans lequel la fenêtre comprend un élément d'identification amovible (120, 130), comprenant l'identifiant lisible par machine (132).

14. Procédé selon l'une quelconque des revendications précédentes, dans lequel l'identifiant lisible par machine (132) comprend ou est un code-barres ou un code à réponse rapide (QR) .

15. Procédé selon l'une quelconque des revendications précédentes, dans lequel les données d'identification (150) comprennent une ou plusieurs :
- des informations sur le type de produit,
- des informations sur la taille du produit,
- des informations sur la fabrication du produit,
- des informations sur la catégorie d'accessoires du produit et/ou
- des informations sur le matériau du produit
relatives à la fenêtre (100) et/ou au dispositif de recouvrement de fenêtre (110).
